# EUROPEAN PATENT SPECIFICATION

(11) **EP 4 198 074 B1**
(45) Date of publication and mention of the grant of the patent: **25.09.2024**
(21) Application number: 21383155.5
(22) Date of filing: 17.12.2021
(51) Int. Cl.: C08G 71/02, C09J 175/02

(54) **A NON-ISOCYANATE POLYURETHANE AND AN ACRYLIC/NON-ISOCYANATE POLYURETHANE ADHESIVE BINDER AND METHODS FOR THEIR PREPARATION**
ISOCYANATFREIES POLYURETHAN UND EIN ACRYL-/ISOCYANATFREIES POLYURETHANKLEBSTOFFBINDEMITTEL UND VERFAHREN ZUR HERSTELLUNG DAVON
LIANT ADHÉSIF EN POLYURÉTHANE NON ISOCYANATE ET LIANT ADHÉSIF EN POLYURÉTHANE ACRYLIQUE/NON ISOCYANATE ET LEURS PROCÉDÉS DE PRÉPARATION

(43) Date of publication of application: 21.06.2023
(73) Proprietor: Fundación Tecnalia Research & Innovation, 20009 San Sebastián, Guipúzcoa (ES)
(72) Inventor: Rodríguez, Raquel, San Sebastián - Guipúzcoa (ES); Villaverde, Haizea, San Sebastián - Guipúzcoa (ES); Pérez, Beatriz, San Sebastián - Guipúzcoa (ES); Flórez, Sonia, San Sebastián - Guipúzcoa (ES)
(74) Representative: Balder IP Law, S.L.

(56) References cited:
- US-A1- 2020 354 507

## Description

### TECHNICAL FIELD

The present invention relates to a non-isocyanate polyurethane (NIPU) obtained from a diamine and an isosorbide bis(alkylcarbonate). The present invention also relates to an adhesive binder obtained from reacting said NIPU described herein with an acrylic monomer. The invention also relates to a method of preparation the NIPU and to a method for the preparation of the adhesive binder. Adhesive binders according to the invention may be used in wide range of adhesive formulations depending of the application of choice. For instance, adhesive formulations comprising a NIPU or an adhesive binder as described herein may be used, e.g., in the manufacture of goods (e.g., shoe production, lamination, e.g., wood lamination, and bookbinding), in packaging, (e.g., in labelling, boxing, lamination, and taping) or in construction (e.g., protective tapes, and painting tapes).

### STATE OF THE ART

Polyurethane (PU) is a very versatile material with a broad range of applications in the automotive, construction, furniture, insulation and textile industries. For example, polyurethane dispersions may be used to coat wood, plastic, metal, glass, fibers, textiles, leather, stone, concrete ceramic or composite and other substrates to provide protection against mechanical, chemical and/or environmental effects. Polyurethane dispersions may also be used for adhesives, sealants, inks and other applications, including cosmetic application.

Generally, polyurethanes (PUs) are most commonly prepared from the polyaddition of polyisocyanates (typically diisocyanates) and bi- or multi-functional polyols. While diols are often biocompatible and biodegradable and easily derived from biomass, isocyanates are derived from the reaction of phosgene with amines. Phosgene can lead to severe toxicity issues causing, e.g., severe respiratory effects; ocular irritation and burns to the eye and skin have been reported and even death. Therefore, the use of isocyanate derivatives should be avoided due to their harmful to human health, particularly for people exposed to phosgene during polyurethanes synthesis, and could entail adverse health effects such as asthma, dermatitis, conjunctivitis, and acute poisoning

Therefore, alternative sustainable routes to synthesize PUs have been developed. Reference is made to, e.g., the publication *Isocyanate-free routes to polyurethanes and poly(hydroxy urethane)s* [Maisonneuve et al., Chem. Rev. 115 (2015) 12407-12439]. These alternative sustainable routes have thus been dedicated to minimize the amount of diisocyanates used and even to develop phosgene/isocyanate-free approaches to PUs, so as to improve the biodegradation and chemical recycling of the PUs produced.

In this context, non-isocyanate polyurethanes (NIPUs) have attracted great deal of attention as compared to the conventional PUs obtained from isocyanates. In particular, the development of water-based NIPUs has gained an increasing interest in the last years because it leads to the design of more eco-friendly processes. Furthermore, there has been great effort to broadening the scope of applications for NIPUs with products that can meet specific performances and market demands. For this reason, there is a demand for the development of NIPUs and methods of synthesis thereof.

General polymer synthetic methods of synthesis of NIPUs may be: step-growth polyaddition, polycondensation, and ring-open polymerization. NIPUs and methods of synthesis thereof have been described in, for instance, the following publications.

CN105542648A relates to a method for synthesizing a NIPU oligomer coating: comprising preparing a polyethylene glycol 200 bicyclocarbonate monomer and reacting said monomer with isophorone diamine, triethylamine and methyl acrylate cyclic carbonate in presence of 3-aminopropyltriethoxysilane.

CN101775137B relates to a waterborne NIPU and a preparation method thereof comprising the steps of: polymerizing one or a plurality of unsaturated monomer(s) containing cyclic carbonate groups and a hydrophilic unsaturated monomer through free radical solution, neutralization and emulsification for preparing the resultant water dispersion of cyclic carbonate functionalized prepolymer, and reacting the water-dispersed cyclic carbonate functionalized prepolymer and a dual amino compound or a multi-element amino compound, thereby preparing the dispersion of the water-based non-isocyanate polyurethane (NIPU).

Miniemulsion polymerization, although it is not yet widespread in the industry, is being developed to synthesize waterborne NIPUs. For instance, the publication Synthesis of fatty acid-based non-isocyanate polyurethanes, NIPUs in bulk and mini-emulsion (Rix et al. Eur. Pol Jour 84 (2015), 863-872) describes the synthesis of waterborne NIPUs latexes by miniemulsion polymerization with up to 30 wt. % solid content starting from 5-membered cyclic carbonates and diamines. NIPUs prepared in miniemulsion were found to exhibit lower molar masses (MW =7kDa, D=1.6) than compounds formed in bulk (Mw=14 KDa, D=2) due to the partial hydrolysis of cyclic carbonates.

One challenge of miniemulsion polymerization is to keep the reagents hydrophobic enough to facilitate their reaction and avoid their migration to the aqueous phase.

Among many applications, PUs may be formulated with acrylates to form, e.g., hybrid PU acrylic binder systems The simple blending of acrylates and PU is a popular approach to combine the beneficial attributes of each of the polymers. However, it often leads to films of lower quality, which is attributed to a low compatibility between two components.

In view of the above, there is a clear need to replace conventional polyurethane by a non-isocyanate polyurethane (NIPU), in particular a NIPU which has suitable compatibility and adhesive proprieties when combined with acrylic monomers for, e.g., hybrid NIPU-acrylic binder systems.

### SUMMARY OF THE INVENTION

The inventors have now found a NIPU obtained from a diamine and an isosorbide bis(alkylcarbonate) which, despite having no adhesive properties per se, may be suitably used in combination with acrylic monomers to provide adhesive binders which have particularly good adhesive properties. Without being bound to any theory the combination of structural features of the diamine and isosorbide used to prepare the NIPU together with a low molecular weight are thought to contribute to the compatibility with the acrylic monomer, rendering this NIPU surprisingly suited for the preparation of adhesive binders, also referred to as acrylic-NIPU hybrid systems.

Accordingly, an object of the present invention is to provide a non-isocyanate polyurethane that may subsequently be reacted with an acrylic monomer to provide an adhesive binder having good or even improved properties, such as mechanical, thermal, rheological and adhesive properties.

In particular the present invention relates to a non-isocyanate polyurethane (NIPU), a method for its preparation, an adhesive binder obtained from said NIPU and an acrylic monomer and a method for its preparation, as defined in the appended claims.

These and other aspects of the invention are further described in the detailed description of the invention, here below.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 shows the force vs strain curves of a hybrid acrylic NIPU system (A-NIPU.10), a conventional acrylic system (A-0) and a NIPU obtained according to the examples.
Figure 2 shows the storage modulus (G') and the loss modulus (G") vs temperature curves of a hybrid acrylic NIPU system (A-NIPU.10), a conventional acrylic system (Acrylic) and a NIPU (NIPU) obtained according to the examples.

### DETAILED DESCRIPTION OF THE INVENTION

A first aspect of the invention relates to a non-isocyanate polyurethane (NIPU) comprising the repeating unit of formula (I) 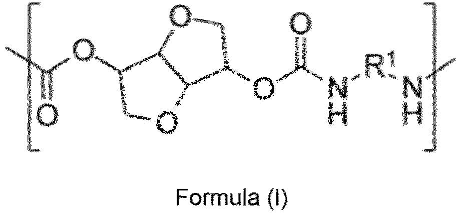
wherein R¹ represents a C10 to C54 hydrocarbondiyl group, in particular a C16 to C48 hydrocarbondiyl group, more in particular a C30 to C42 hydrocarbondiyl group, yet more in particular a C36 hydrocarbondiyl group, or a -R³-(O- R⁴)ₚ- ether or polyether group wherein R³ and R⁴ are independently selected from a linear or branched alkyl, in particular selected from a linear or branched C1 to C6, more in particular selected from methylene, ethylene, propylene or isopropylene, preferably R³ and R⁴ are the same, and more preferably both R³ and R⁴ are methylene, and wherein p is from 1 to 68,
and having a weight average molecular weight (Mw) from 500 to 10000 g/mol and a number average molecular weight (Mn) from 500 to 10000 g/mol.

In the context of the present description the term NIPU is used to refer to a polymeric compound of a structure and a Mw and Mn as defined herein, which may also be referred to as a NIPU prepolymer.

A NIPU as defined herein may typically be contained in a polymeric composition comprising said NIPU polymeric compound (or NIPU prepolymer) and additional components, which may be present, e.g., as a result of the method of preparation of the polymeric compound. A NIPU polymeric compound or polymeric composition may be used to formulate adhesive binders, as elucidated in more detail below.

The weight average molecular weight (Mw) and the number average molecular weight (Mn) of a NIPU as described herein may be determined by methods known in the art. In particular, the Mw and Mn may be determined by, gel permeation chromatography (GPC), more in particular using a THF mobile phase, at 40 °C and polystyrene (PS) calibration.

In several embodiments, a NIPU as described herein may have a weight average molecular weight (Mw) from 750 to 7500 g/mol, in particular from 1000 to 5000, and more in particular from 1500 to 3000 g/mol. In several particular embodiments the Mw may be from 2000 to 2600 g/mol, more in particular from 2100 to 2500.

In several embodiments, a NIPU as described herein may have a number average molecular weight (Mn) from 750 to 7500 g/mol, in particular from 1000 to 5000, and more in particular from 1500 to 3000 g/mol. In several particular embodiments the Mn may be from 2000 to 2600 g/mol, more in particular from 2100 to 2400 g/mol.

The polydispersity index (PDI) of a NIPU as described herein, determined as Mw/Mn, may typically be very close to 1. In particular the PDI may be from 1.005 to 1.100, and more in particular from 1.015 to 1.090, more in particular from 1.030 to 1.070.

It has been surprisingly found that NIPUs having the combination of Mw and Mn molecular weight values as described herein, even though per se do not have adhesive properties, when combined with other monomers, such as acrylic monomers, may provide suitable adhesive binders, or even adhesive binders with improved properties. Furthermore, polydispersity indices as described above advantageously are indicative of a low polydispersity and of a good control of the synthesis has been achieved which means that the polymer chains of the NIPU as described herein typically have the same length or have very similar lengths.

A NIPU as described herein comprises the repeating unit of formula (I)

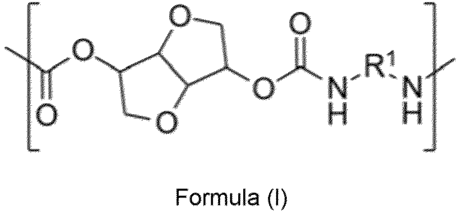

In formula (I) R¹ may be a C10 to C54 hydrocarbondiyl group, in particular a C16 to C48 hydrocarbondiyl group, more in particular a C30 to C42 hydrocarbondiyl group, yet more in particular a C36 hydrocarbondiyl group.

In several embodiments, the hydrocarbondiyl group of R¹ may be a fatty-acid based dimer hydrocarbondiyl group. A fatty-acid based dimer hydrocarbondiyl group, is a hydrocarbondiyl group whose structure is derived from the dimerization of unsaturated fatty acids and the corresponding fatty-acid based dimer diamine used for the preparation of the NIPU.

In formula (I) R¹ may be a -R³-(O- R⁴)ₚ- ether or polyether group wherein R³ and R⁴ are independently selected from a linear or branched alkyl, in particular selected from a linear or branched C1 to C6, more in particular selected from methylene, ethylene, propylene or isopropylene, preferably R³ and R⁴ are the same, and more preferably both R³ and R⁴ are methylene, and wherein p is from 1 to 68.

The hydrocarbondiyl group and the ether or polyether group will be determined by the diamine used for the preparation of the NIPU. Accordingly, the use of a specific C10-C54 hydrocarbon diamine in the preparation of the NIPU will lead to the corresponding R1 being a C10-C54 hydrocarbondiyl group of the same number of carbons. For instance, fatty-acid based dimer diamines will lead to R1 being a fatty-acid based dimer hydrocarbondiyl group. The types of diamines used in the preparation of the NIPU are described in more detail below. Similarly, the use of a specific ether or polyether diamine in the preparation of the NIPU will lead to R¹ having the corresponding ether or polyether group in the repeating unit of formula (I).

The repeating unit of formula (I) typically conforms the backbone of a NIPU as described herein. The termination of the NIPU at either end of the repeating unit may be any suitable termination known in the art and may depend on the exact method of preparation of the NIPU. For instance, as a mode of example the NIPU may be terminated with a free amine in both ends or, the NIPU may be terminated with a free amine on the nitrogen end and may be terminated with, e.g., a methyl in the carboxyl end.

The backbone of a NIPU as described herein may have the repeating unit of formula (I) as the major repeating unit or the only repeating unit. Typically, NIPU may comprise from 75 to 100 wt.% of the repeating unit of formula (I) with respect to the total weight of the NIPU, the weight of the terminal groups on either end of the repeating unit of formula (I) being considered as constituting part of the weight of the first and last repeating unit of formula (I).

It is difficult to precisely define the number of repeating units of formula (I) of a NIPU as described herein. As one skilled in the art will understand, there will be a variability in the number of repeating units of all the independent polymeric chains conforming the NIPU. Also, the number of repeating units will be depended on the molecular weight of the NIPU and the nature of R¹. Accordingly, the number of repeating units may vary and needs no further elucidation here. Nonetheless, as a mode of example, a NIPU of a Mw of about 750 g/mol the NIPU with an R1 being saturated C10 hydrocarbondiyl may have 2 repeating units of formula (1) and a NIPU of a Mw of about 7500 with a R1 being an unsaturated C36 hydrocarbondiyl, may have about 10 repeating units of formula (1).

In particular, the NIPU according to the invention may be the reaction product of a diamine of formula (II) and an isosorbide bis(alkylcarbonate) of formula (III) 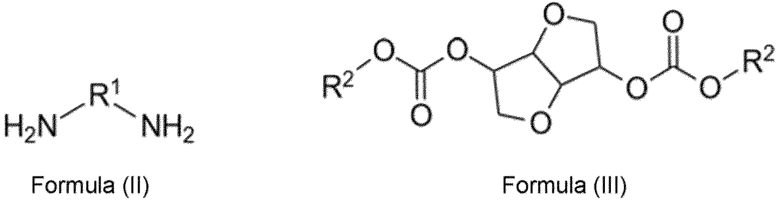 wherein R¹ is defined as above, and wherein each R² independently represents a linear or branched alkyl, in particular a linear or branched C1 to C6 alkyl, more in particular represents methyl or ethyl, and yet more in particular represents methyl.

Diamines and isosorbide bis(alkylcarbonates) as described herein are used as building blocks of the NIPU polymer, and react to constitute the repeating unit of formula (I), thereby conforming the backbone of the NIPU polymer.

The diamines used herein have the formula (II). Diamines of formula (II) with R1 groups as defined herein typically are hydrophobic diamines.

In particular, a diamine of formula (II) as described herein may be selected from ether or polyether diamines and long chain hydrocarbon diamines.

Long chain hydrocarbon diamines are diamines of formula (II) wherein R1 is a hydrocarbondiyl group as defined above (for formula (I)). In particular, the long chain hydrocarbon diamines may be selected from C10-C54 hydrocarbon diamines. More in particular may be selected from C16 to C48 hydrocarbondiamines, in particular a C30 to C42 hydrocarbondiamines, more in particular may be a C36 hydrocarbondiamine. More in particular the diamine of formula (II) as described herein may be a fatty acid-based dimer diamine, also referred to simply as dimer diamine (DDA). Nore in particular the DDA may be a C30 to C42 fatty acid-based dimer diamine, and yet more in particular may be a C36 fatty acid-based dimer diamine.

In several embodiments, the diamine may be a C36 fatty acid-based dimer diamine comprising or consisting of a diamine of formula (IIa) and/or (IIb):

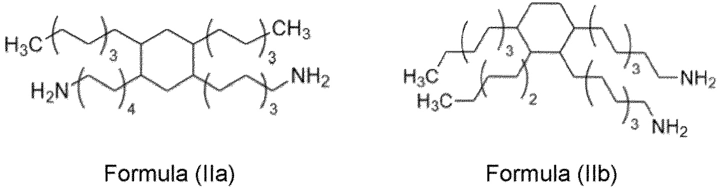

Such diamines will result in a NIPU having a repeating unit of formula (I) wherein R1 is a C36 hydrocarbondiyl group of formula (1a) and/or formula (1b):

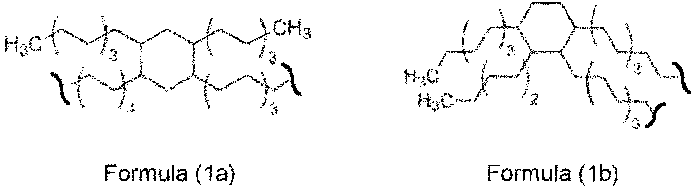

Hydrocarbon diamines suitable for NIPUs as described herein may be prepared by methods known in the art or may be commercially available. For instance, suitable hydrocarbon diamines which are commercially available may include, e.g., Priamine TM 1075 from CRODA (a C36 fatty acid-based dimer diamine).

Ether or polyether diamines are diamines of formula (II) wherein R1 is an ether or a polyether group as defined above (for formula (I)). Suitable ether or polyether diamines may be prepared by methods known in the art or may be commercially available. For instance, suitable ether or polyether diamines which are commercially available may include, e.g., JEFFAMINE^{®} D series from HUNTSMAN (a polyether diamine having a polypropylene glycol (PPG) backbone).

A NIPU as described herein is further obtained from isorbide bis(alkylcarbonates) of formula (III).

Isosorbide (1,4:3,6-dianhydro-D-glucitol or 1,4: 3,6-dianhydrosorbitol) is a commercial primary bio-based diol obtained from glucose by dehydration of D-sorbitol. It is biodegradable, soluble in water and classified as a GRAS (generally recognized as safe) substance. Isosorbide possesses a stereochemistry and geometry suitable for making cost effective chemicals, and thanks to its molecular rigid configuration constituted by two tetrahydrofuran rings it provides mechanical strength to the corresponding derivatives. Moreover, isosorbide is characterized by a high glass transition temperature (Tg), tensile modulus, UV stability, and visible light transmission [Olga Gómez-de-Miranda-Jiménez-de-Aberasturi, Ander Centeno-Pedrazo, Soraya Prieto Fernández, Raquel Rodriguez Alonso, Sandra Medel, Jose Maria Cuevas, Luciano G. Monsegue, Stefaan De Wildeman, Elena Benedetti, Daniela Klein, Hartmut Henneken & José R. Ochoa-Gómez (2021) The future of isosorbide as a fundamental constituent for polycarbonates and polyurethanes, Green Chemistry Letters and Reviews, 14:3, 533-543, DOI:10.1080/17518253.2021.1965223].

Isosorbide bis(alkylcarbonates) may be used in the preparation of a NIPU as described herein in combination with diamines providing an alternative to the use of highly toxic diisocyanates in combination with polyols for the formation of polyurethane.

Isorbide bis(alkylcarbonates) used according to the invention have the formula (III) as indicated above, and may be particularly selected from isosorbide bis(methyl carbonate) (IBMC), and isosorbide bis(ethyl carbonate).

In a particular embodiment, isosorbide bis(methyl carbonate) (IBMC) is preferably used herein for reacting with a diamine of formula (II) and produce the NIPU described herein. Among the derivatives of isosorbide, isorbide bis(alkylcarbonates) and IBMC in particular are a green alternative to the synthesis of isocyanate which avoids the use of toxic substances as phosgene, disphosgene or DPC.

Isorbide bis(alkylcarbonates), and IBMC in particular, may be produced from the methoxycarbonylation reaction between isosorbide and alkyl carbonates, and dimethyl carbonate (DMC) in particular, as described in WO2014114823A1.

In a particular embodiment, the NIPU described herein is the reaction product of the reaction between IBMC and a C36 fatty acid-based dimer diamine.

NIPUs as described herein may contained in a dispersion, e.g., an oil in water dispersion, or may in solid or semi-solid form, e.g., of the consistency of honey or glue.

A dispersion containing a NIPU as described herein may typically comprise, in addition to the NIPU, water and a surfactant, and therefore may be referred to as a polymeric composition comprising the NIPU, water and a surfactant.

A dispersion of a NIPU described herein may have a Z-average size from 0.01 to 0.7 µm, in particular from 0.08 to 0.600 µm, more in particular from 0.1 to 0.50 µm and yet more in particular from 0.15 to 0.4 µm.

The Z-average size (also referred to as Z-average mean) may be determined according to in ISO 13321 (and more recently ISO 22412) wherein it is also referred to as the cumulants mean or the "harmonic intensity average particle diameter".

The Z-average size of the particles in the NIPU dispersion can be measured by Dynamic Light Scattering (DLS). DLS is a technique that determines the diameter of the sphere that diffuses at the same speed as the particle being measured.

The DLS method basically uses a process of observing the scattering of laser light from particles, the Stokes-Einstein relation (Stokes-Einstein relations) to determine the scattering velocity, and then determines the particle size from the scattering of the laser light.

For instance, a Zetasizer nano series (e.g., ZS) from Malvern Panalytical may be used to determine the Z-average size of the particles in the NIPU dispersion. The Zetasizer system determines the size of the particles in the NIPU dispersion by first measuring the Brownian motion of the particles in a sample using DLS and then interpreting a size from this using established theories known to the skilled person.

DLS results are often expressed in terms of the Z-average size or Z-average mean. The Z-average size is a parameter that arises when DLS data is analyzed by the use of the technique of cumulants and can be thought of as force-fitting the result to a simple Gaussian distribution where the Z-average is the mean. Since the calculation of the Z-average size is mathematically stable, the Z-average result is insensitive to noise, and that makes it a preferred DLS size parameter.

In particular, droplet and polymer particle size distributions may be measured by Dynamic Light Scattering (DLS) using a Zetasizer Nano Series (Malvern) instrument by diluting a fraction of the NIPU dispersion with deionized water.

Preferably, a NIPU as described herein may be in (semi)solid form, i.e., solid or semi-solid form, typically in semi-solid form, e.g., having a consistency similar to that of honey or glue.

A NIPU in (semi)solid form may be a polymer composition also typically comprising, in addition to the NIPU, components used in the preparation of the NIPU, e.g., a surfactant.

The present invention also relates to a method for the preparation of the NIPU as described herein by miniemulsion polymerization.

Miniemulsion polymerization is a process known in the art. Typically, miniemulsion polymerization involves the use of an effective surfactant to produce very small monomer droplets, e.g., having a Z-average size from 0.01 to 0.5 µm, and the reaction proceeds in by polymerization of the monomer in these small droplets.

In particular, a method for the preparation of a NIPU polymeric product comprising the NIPU as described above, by miniemulsion polymerization, comprises the following steps:
a) preparing an organic phase comprising mixing the diamine of formula (II) and the isosorbide bis(alkylcarbonate) of formula (III) as defined above, at a molar ratio from 1:2 to 2:1;
b) preparing an aqueous phase comprising dissolving a surfactant in water at weight ratio from 5 to 15 wt.%, based on the total weight of water;
c) mixing the organic phase and the aqueous phase by sonication, high-shear mixing or homogenization, in particular by sonication, thereby obtaining a miniemulsion;
d) heating the miniemulsion of step c) to a temperature from 60 to 85°C, in particular, from 65 to 85 °C, more in particular from 70 to 80 °C, thereby providing a heated miniemulsion;
e) adding a catalyst to the heated miniemulsion of step d) in an amount from 1.5 to 6 mol%, in particular from 2 to 4 mol%, preferably of about 3 mol% with respect to total sum of moles of isosorbide of formula (III) and diamine of formula (III), thereby providing a reaction mixture;
f) maintaining the reaction mixture of step e) to a temperature from 60 to 85°C, in particular, from 65 to 85 °C, more in particular from 70 to 80 °C for from 1 to 8 hours, in particular from 2 to 7 hours thereby obtaining a reaction product;
g) drying the reaction product of step f) to provide the NIPU polymeric product.

The diamine of formula (II) and the isosorbide bis(alkylcarbonate) of formula (III) for use in the method of preparing the NIPU described herein are as defined above.

In step a) preparing the organic phase by mixing the diamine of formula (II) and the isosorbide bis(alkylcarbonate) of formula (III) and in step b) preparing the aqueous phase by dissolving a surfactant in water using methods known in the art. Mixing and dissolving is typically performed until a homogeneous organic phase and a homogeneous aqueous phase are obtained.

The organic and the aqueous phases may be prepared simultaneously, e.g., in parallel, or one after the other, in sequence.

In the organic phase, the molar ratio of diamine of formula (II) to isosorbide bis(alkylcarbonate) of formula (III) is from 1:2 to 2:1, in particular from 1:1.5 to 1.5:1, more in particular from 1:1.25 to 1.25:1. In several embodiments the molar ratio may be selected from 1:2, 1:1 and 1:2.

The mixture of the diamine of formula (II), and isosorbide bis(alkylcarbonate) of formula (III) as such may already constitute the organic phase, accordingly the organic phase obtained may typically consist of the mixture of diamine of formula (II) the isosorbide bis(alkylcarbonate) of formula (III). Therefore, the preparation of the organic phase advantageously does not need an organic solvent.

The surfactant used in a method as described herein to prepare the aqueous phase may be any suitable surfactant known in the art. As a mode of example, a surfactant may be selected from nonionic surfactants, in particular polyoxyethylene (20) sorbitan monooleate. The surfactant contributes to the stabilization of the miniemulsion to be obtained in the method of preparation of the NIPU.

To prepare the aqueous phase, the surfactant may be used in a weight amount from 5 to 15 wt.% based on the total weight of water, in particular from 7 to 13 wt.% and more in particular from 8 to 12 wt.%, yet more in particular of about 10 wt.%.

A method as described herein comprises a step c) of mixing the organic phase and the aqueous phase by sonication, high-shear mixing or homogenization, thereby obtaining a miniemulsion. Sonication may be particularly used. Accordingly, in step c) mixing may be achieved by using apparatus known in the art such as sonifiers (also referred to as sonicators), high-shear mixers (e.g., rotor-stator systems), and homogenizers (e.g., high-pressure homogenizers).

A sonifier produces ultrasound waves that cause the molecules to oscillate about their main position as the waves propagate. During the compression cycle, the average distance between the molecules decreases, whilst during rarefaction the distance increases. The rarefaction results in a negative pressure that may cause formation of voids or cavities (cavitation bubbles) that may grow in size. In the succeeding compression cycle of the wave, the bubbles are forced to contract and may even disappear totally. The shock waves produced on the total collapse of the bubbles cause the breakup of the surrounding monomer droplets. Droplet size is controlled by the sonication power, time and the amount of surfactant and the volume fraction of the organic phase. A suitable sonifier may be, e.g., a commercial sonifier from Branson such as a Branson Sonifier 450.

As a mode of example sonication may be performed using high power, e.g., from 150 to 200W, in particular from 160 to 180 W. Sonication may be typically performed at room temperature, e.g., at a temperature from 15 to 35 °C, in particular from 20 to 30 °C, more in particular from 23 to 27 °C. Sonication is performed until a miniemulsion is obtained. For instance, a miniemulsion may be typically obtained after 5 to 40 minutes of sonication, in particular from 10 to 30 minutes and more in particular from 15 to 25 minutes. As a skilled person would understand, the exact time may depend on the exact conditions used. As a particular example, a miniemulsion may be obtained after 20 min of sonication at 170 W and at 25 °C.

High shear mixers, such as rotor -stator systems, rely on turbulence to produce the emulsification. The minimum droplet sizes that can be achieved with this type of equipment depends on the size of the smallest turbulence eddy formed, which in turn depends on the geometry of the rotor-stator systems and on the rotation speed. Droplet size depends on rotor speed, surfactant concentration and organic phase volume fraction.

Suitable homogenizers may typically be high-pressure homogenizers (such as a Manton-Gaulin-type homogenizer or microfluidizer) wherein a coarse dispersion is pressurized using a positive displacement pump, and flow through a narrow gap at high velocity. Droplet size depends on the geometry of the homogenizer, applied pressure, surfactant concentration and organic phase volume fraction.

A miniemulsion as described herein has the meaning commonly understood in the art. In particular, for the purpose of the present description a miniemulsion may be defined as an aqueous dispersion of oil droplets of small size, also referred to as an oil-in-water emulsion, i.e., a dispersion of small oil droplets in water. The droplets may have, e.g., a Z-average size from 0.01 to 0.70 µm, in particular from 0.08 to 0.60 µm, more in particular from 0.10 to 0.50 µm and yet more in particular from 0.15 to 0.40 µm.

At the beginning of a method of preparation of a NIPU as described herein such oil-in-water miniemulsion oil droplets are constituted by the monomers used for the preparation of the NIPU (i.e., diamine of formula (II) and isosorbide bis(alkylcarbonate) of formula (III)). The miniemulsion obtained in the method of the preparation of the NIPU may have a Z- average size as defined above. As the polymerization progresses the miniemulsion oil droplets will be enriched in the NIPU polymerization product.

In step c) mixing may comprise, prior to mixing by sonication, high-shear mixing or homogenizing, a step wherein the aqueous phase and the organic phase are mixed to provide a coarse emulsion, e.g., by stirring.

A method as described herein comprises a step d) of heating the miniemulsion to a temperature from 60 to 85°C, in particular, from 65 to 85 °C, more in particular from 70 to 80 °C, thereby providing a heated miniemulsion. Heating may be performed by methods known in the art. For instance, heating may be performed in the same reactor where the polymerization reaction will take place.

A method as described herein comprises a step e) of adding a catalyst to the heated miniemulsion.

In step e) a catalyst may be selected from, e.g., aluminium triflate (ALT), titanium(IV) butoxide (Ti(OBu)₄), diethylentriamine (DETA) and triethylenediamine (DABCO).

The catalyst may be added in an amount from 1.5 to 6 mol%, in particular from 2 to 4 mol%, preferably of about 3 mol% with respect to total sum of moles of isosorbide of formula (III) and diamine of formula (II).

The addition of the catalysts provides a reaction mixture and starts the polymerization reaction.

A method as described herein comprises a step f) of maintaining the reaction mixture of step e) to a temperature from 60 to 85°C, in particular, from 65 to 85 °C, more in particular from 70 to 80 °C for from 1 to 8 hours, in particular from 2 to 7 hours, thereby obtaining a reaction product. At this range of temperatures, the polymerization reaction takes place in the presence of the catalyst. As a mode of example, the reaction temperature may be of about 80 °C.

The formation of the NIPU may be monitored by fourier transform infrared (FTIR), by observation of the formation of urethane groups in the NIPU product. For instance, this method allows to monitor the appearance of a peak related to the characteristic urethane group of a NIPU as described herein (e.g., at about 1670 cm⁻¹). Furthermore, this method may allow to observe the disappearance of peaks related to groups of the starting materials (e.g., where isosorbide bis(methyl carbonate) (IBMC) is used as the starting material the disappearance of a characteristic peak of the carbonyl group at about 1754 cm⁻¹ may be observed).

FTIR may be performed by methods known in the art. As a mode of the example, to obtain the FTIR spectra, samples of the reaction mixture may be deposited in a KBr plate and recorded using a suitable spectrometer (e.g., Vertex 70 spectrometer from Bruker), over a spectral range of, e.g., 4000-400 cm⁻¹. In particular, a mid-infrared (MIR) source may be used together with, e.g., a Room Temperature Deuterated Lanthanum α Alanine doped TriGlycine Sulphate (RT-DLaTGS) detector using, e.g., a resolution of 4 cm⁻¹ and an aperture of 6 mm.

The reaction mixture is maintained at the reaction temperature until the reaction product is obtained, e.g., until the reaction is complete. For instance, if the reaction is monitored by FTIR, and the temperature may be maintained until the characteristic peaks of the starting materials are no longer observed, and/or the intensity of the characteristic peaks of the NIPU product remains constant.

As a skilled person will understand, the exact reaction time may depend on the exact reaction conditions and exact reactants and catalysts used. As a mode of example, the reaction temperature may be maintained for a period of 2 to 8 hours, more in particular from 3 to 7 hours, and yet more in particular from 4 to 6 hours. For instance, for a reaction temperature of 80 °C the temperature may be maintained for 5 hours.

The reaction may be stopped by means known in the art. As a mode of example, the reaction may be stopped by cooling down the reactor, e.g., by bringing the temperature of the reaction mixture down to room temperature, e.g., from 15 to 35 °C.

The reaction product obtained contains the NIPU polymer, and at the end of the reaction will be in the form of a dispersion.

The reaction product in the form of a dispersion comprising the NIPU polymer may be useful as such.

However, a method as described herein further comprises a step g) of drying the reaction product to provide the NIPU polymeric product.

In step g) drying of the reaction product may be performed by means known in the art. For instance, drying may be performed using a rotary evaporator.

Drying will typically reduce and eliminate the water present in the reaction product and provide a NIPU polymeric product which comprises a NIPU as described herein and other components used in the preparation of the NIPU, such as a surfactant, and a catalyst. The NIPU polymeric product may also comprise small amounts of the starting materials and side products.

In a method of preparation of a NIPU as described herein the yield of the reaction between the diamine of formula (II) and the isosorbide of formula (III) can be determined by techniques known by the skilled person. For example, the yield of reaction can be determined by quantifying the residual amounts of starting materials (i.e., diamine of formula (II) and an isosorbide bis(alkylcarbonate) of formula (III)), and side products (e.g., isosorbide and isosorbide monomethyl carbonate (IMMC), if IBMC is used as the isosorbide bis(alkylcarbonate) of formula (III)). The amounts of residual starting materials and side products may be quantified by Gel Permeation Chromatography (GPC), looking at Mw of the Isosorbide and dimers from isosorbide.

Typically, the yield of the NIPU preparation may be from 75 to 95%, based on the quantification of the residual amounts of starting materials and side products. In particular, the yield may be from 78 to 92 %, more in particular from 80 to 90 %.

In the method of preparation of a NIPU as described herein the NIPU can be characterized by GPC as indicated above. Typically, a NIPU obtained by a method as described herein have an Mw, Mn and a PDI as described above. Such NIPU may typically be linear polymers of short chains.

A NIPU polymeric product obtained by a method as described herein may be used as such or may be purified by methods known in the art. Nonetheless, it has been found, that the NIPU polymeric product may be suitably used directly as obtained by a method as described herein and, therefore, advantageously, requires no purification.

Accordingly, the instant invention also relates to the NIPU polymerization product obtained by or obtainable by the method described herein, with or without purification, preferably without purification.

In a particular embodiment, a method of preparing a NIPU polymeric product may comprise the following steps:
a) preparing an organic phase comprising mixing a C36 fatty acid-based dimer diamine and isosorbide bis(methyl carbonate) (IBMC), at one molar ratio selected from 2:1, 1:1 and 1:2;
b) preparing an aqueous phase comprising dissolving polyoxyethylene (20) sorbitan monooleate as a surfactant in water in an amount of surfactant of 10wt% with respect to the total weight of water;
c) mixing the organic phase and the aqueous phase by sonication, e.g., at 170W at a temperature of 25° C during 20 min, thereby obtaining a miniemulsion;
d) heating the miniemulsion of step c) at a temperature of 80°C, thereby obtaining a provide a heated miniemulsion;
e) adding triethylenediamine (DABCO) as the catalyst to the heated miniemulsion of step d) in an amount of 3 mol% with respect to total mols of IBMC and C36 fatty acid-based dimer diamine, to obtain a reaction mixture;
f) maintaining the reaction mixture of step e) at a temperature of 80°C, thereby obtaining a reaction product.
g) drying the reaction product of step f) to provide the NIPU polymeric product.

The present invention also relates to an adhesive binder obtained by the polymerization of i) a NIPU as described herein and ii) an acrylic monomer.

Adhesive binders derived from acrylic monomers and polyurethanes are typically referred to PU-acrylic hybrid systems. Accordingly, an adhesive binder as described herein may also be considered as a hybrid system, in particular a NIPU-acrylic hybrid system.

It has now been found that an adhesive binder obtained by the polymerization of i) a NIPU as described herein and ii) an acrylic monomer may provide a hybrid system with advantageous properties as such and in adhesive formulations where they may be incorporated, e.g., in pressure sensitive adhesive formulations.

Pressure-sensitive adhesives (PSA) are soft polymeric materials with permanent tack. They instantly adhere to a wide range of surfaces when a mild pressure is applied over a short period of time. These adhesive materials are characterised by their adhesion and cohesion, two conflicting properties that are directly linked to the viscoelastic properties of the material. The event of adhesion is a result of the wetting of the substrate as well as the Van der Waals and polar forces between the adhesive and the substrate. On the other hand, the intermolecular forces and covalent bonds, such as crosslinks, influence the cohesion of a PSA system. The inventors have surprisingly found that the incorporation of a NIPU-acrylic hybrid system as described herein into PSA formulations provides a good balance between their adhesion and cohesion properties, resulting in PSA formulations that have excellent thermal, mechanical, rheological and adhesive properties.

A NIPU for the polymerization with an acrylic monomer to obtain the adhesive binder may be directly used as a NIPU polymeric product obtained by the method of preparation of described above.

An acrylic monomer may be selected from methyl methacrylate, butyl acrylate and acrylic acid, 2-ethylhexylacrylate, methacrylic acid, and butylmethacrylate. In particular, the acrylic monomer may be an acrylic monomer mixture. More in particular, the acrylic monomer mixture may comprise at least two of butylacrylate, methylmethacrylate and acrylic acid. Yet more in a particular, the acrylic monomer mixture may consist of butylacrylate, methylmethacrylate and acrylic acid, as a mode of example an acrylic monomer mixture consisting of 88 wt.% of butylacrylate, 10 wt.% of methylmethacrylate and 2 wt.% of acrylic acid, the weight proportion of each monomer being with respect to the total weight of acrylic monomers.

Such acrylic monomers are commercially available or may be prepared by methods known in the art.

In the context of the invention, the term "acrylates" or "acrylic monomers" are indistinctly used.

In a particular embodiment, an adhesive binder as described herein may be obtained by reacting a weight proportion of NIPU component i) from 1 to 30 wt. %, in particular from 5 to 10 wt.%, and a weight proportion of acrylic monomer component ii) from 99 to 70 wt.%, in particular from 95 to 90 wt. %, the weight proportion of each component with respect to the total weight of NIPU (i) and acrylic monomer (ii) used for the preparation of the adhesive binder.

In a preferred embodiment of the invention, the adhesive binder may be obtained by reacting a 5 wt. % of NIPU and a 95 wt. % of acrylic monomer with respect to the total weight of acrylic monomer and NIPU.

In another preferred embodiment of the invention, the adhesive binder may be obtained by reacting a 10% wt.% of NIPU and a 90% of acrylic monomer with respect to the total weight of acrylic monomer and NIPU.

Adhesive binders as described herein may further comprise components other than the polymer of the reaction of the NIPU and the acrylic monomer, as such. Additional components may typically be components used in the preparation of the adhesive binder, residual amounts of starting materials and side products.

For instance, an adhesive binder as described herein may comprise a surfactant, in particular a surfactant selected from sodium dodecyl sulfate, fatty alcohol sulfate, sodium salt, alkyldiphenyloxide disulfonate. Surfactants are typically used in the preparation of the adhesive binder by miniemulsion polymerization, in order to stabilize the miniemulsion. A surfactant may be present in an amount from 1 to 5 wt.% with respect to the total weight of acrylic monomer and NIPU.

An adhesive binder as described herein may also comprise a thermal initiator. Thermal initiators are catalysts of choice for use in the preparation of the adhesive binder by miniemulsion polymerization. A thermal initiator may be selected from ammonium persulfate, potassium persulfate, hydrogen peroxide, lauroyl peroxide and azobisisobutironitrile; and distilled de-ionized water (DDI). A thermal initiator may be present in an amount from 0.25 to 1.25 wt.% with respect to the total weight the total weight of acrylic monomer and NIPU.

An adhesive binder as described herein may also comprise a costabilizer. A costabilizer may be used in the preparation of the adhesive binder by miniemulsion polymerization, to, e.g., further stabilize the miniemulsion. A costabilizer may be selected from the group consisting of stearyl acrylate and hexadecane. A costabilizer may be present in an amount from 1 to 4 wt.% with respect to the total weight of acrylic monomer and NIPU.

An adhesive binder as described herein may be in the form of dispersion, in particular an aqueous dispersion of the reaction product of the NIPU (i) and an acrylic monomer (ii). Accordingly, an adhesive binder in the form of an aqueous dispersion may comprise water. Water may be present in an amount from 40 to 80 wt.% with respect to total formulation. In other words, the solid content of the adhesive binder may be from 20 to 60 wt.% with respect to total formulation. If the adhesive binder is a dispersion, typically a miniemulsion, the dispersion in particular may have a Z-average size from 0.01 to 0.50 µm, in particular from 0.05 to 0.25 µm, more in particular from 0.07 to 0.20 µm and yet more in particular from 0.09 to 0.17 µm. The Z-average size may be measured as indicated above and indicates the size of the particles of the dispersion (in particular the miniemulsion).

Aqueous dispersions of hybrid binder systems such as those described herein may also be referred to as waterborne systems.

As a mode of example, an adhesive binder as described herein may comprise
- 40 wt.% of the reaction product of NIPU (i) and acrylic monomer (ii), based on the total weight of the adhesive binder,
- 4 wt.% of surfactant,0.5 wt.% of initiator, 4 wt.% of costabilizer based on the total weight of NIPU and acrylic monomer, and
- water.

More in particular, the adhesive binder may comprise
- 50 wt.% of the reaction product of NIPU and acrylic monomer based on the total weight of the adhesive binder,
- 4 wt.% of surfactant and 0.75 wt.% of initiator, 4 wt.% of costabilizer based on the total weight of NIPU and acrylic monomer, and
- water.

Typically, water making the remaining up to 100 wt.% of the adhesive binder.

In a particular embodiment, the adhesive binder may comprise the reaction product of a NIPU as described herein with an acrylic monomer mixture comprising butylacrylate, methylmethacrylate and acrylic acid, alkyldiphenyloxide as surfactant, ammonium persulfate as thermal initiator, stearyl acrylate as costabilizer, and water.

An adhesive binder as described herein may be used as such or may be used to obtain suitable adhesive formulations.

When used as such an adhesive binder as described herein may be applied, e.g., in the form of a dispersion and allowed to dry. Upon drying the adhesive binder would form a film of the reaction product of the NIPU (i) and the acrylic monomer (ii) by coalescence of the polymer particles.

It has been surprisingly found that, despite the fact that a NIPU described herein does not have adhesive properties per se, adhesive binders obtained by reacting a NIPU as described herein with an acrylic monomer have good thermal, mechanical and rheological properties. Such properties may be as good as those from a binder obtained solely from an acrylic monomer, and may be even improved.

It has been surprisingly found that in these adhesive binders in the form of dispersions, the acrylic component provides the outdoor and alkali resistance, as well as good pigment compatibility and low cost, while the NIPU enhances the toughness, flexibility and film forming performance.

The introduction of the NIPU into a standard waterborne acrylic monomer increases the adhesive shear strength of the resulting adhesive binder because the polar groups of the polyurethane may form hydrogen bonds with each other. Moreover, because the high flexibility of polyurethane molecular chains leads to a low entanglement molecular weight, a higher density of entanglements is achieved.

The thermal, mechanical, rheological and adhesive properties of an adhesive binder as described herein can be determined by methods known by a skilled person. In particular, such properties will be determined after applying the adhesive binder, e.g., in the form of a dispersion, and allowing the adhesive binder to dry.

For example, thermal properties can be characterized by using the differential scanning calorimetry (DSC); mechanical properties by using the mechanical thermal analysis (DMTA); rheological properties by using shear tests carried out in oscillatory mode using a rheometer; and adhesive properties by using a Tack adhesion test.

An adhesive binder as described herein may have a glass transition temperature (Tg) from -30 to -40 °C, in particular from -36 to -38 °C as measured by DSC (after drying a sample of the adhesive binder, e.g., overnight). In particular, the glass transition temperature may be measured from 10-15 mg of dried adhesive binder in a DSC instrument (such as a DSC Q-100 (TA Instruments)) by heating the dried sample from -90 to 350°C under nitrogen atmosphere (50mL/min) and the glass transition temperature may be taken at the half height of the change in heat capacity.

The mechanical properties of adhesive binders as described herein may be measured after casting the adhesive binders at room temperature (e.g., at about 25 °C) using a dynamic mechanical thermal analysis (DMTA) using a suitable apparatus (e.g., a Triton Tritec 2000 apparatus). From the DMTA analysis can be calculated the tanδ, the storage modulus G' and the loss modulus G" of the adhesive binders.

Adhesive binders as described herein may typically have have a mechanical tan δ (also known as tan delta or tangent delta), at its maximum, from 1.90 to 2.20, in particular from 1.95 to 2.15 and more in particular from 2.00 to 2.10 at about -23°C. The tan δ quantifies the way in which a material absorbs and disperses energy.

Adhesive binders as described herein may typically have a storage modulus G' measured at 25 °C, from 2.75 to 3.5 Pa, in particular from 2.90 to 3.25 Pa, and more in particular from 2.95 to 3.10 Pa, and may have a loss modulus G" at 25 °C, from 7.00 to 8.50 Pa, in particular from 7.20 to 8.20 Pa and more in particular from 7.50 to 8.00 Pa.

The rheological properties can be determined from adhesive films obtained by applying and drying the adhesive binders. Shear tests may be performed using a rheometer (e.g., ARES rheometer from TA instruments) in oscillatory mode. For instance, a temperature sweep may be performed at frequency of 1Hz and a heating speed of 2°C/min using parallel plates of 12 mm. Prior to the sweep, the linear viscoelasticity zone was checked. The viscoelastic behaviour of the adhesive binder can be illustrated by the tan δ, G' and G" obtained from the rheological curves measured. The rheological tan δ of adhesive binder as described herein may be from 1.75 to 2.5, in particular from 1.90 to 2.20, and more in particular from 2.05 to 2.15 at about 21 °C (e.g., at 21.3°C). The rheological G' of adhesive binder as described herein may be from 2.95 to 3.10Pa, and the rheological G" may be from 7.50 to 8.00 Pa.

Adhesive properties may be determined from adhesive films obtained by applying and drying the adhesive binders. For instance, adhesive properties may be characterized by a Tack Adhesion test, for instance using a rheometer (e.g., an ARES rheometer from TA instruments). Adhesive binders as described herein typically have a higher cohesive failure than acrylic systems as such.

As a mode of example, the adhesion properties of the adhesive binders can also be determined from the storage modulus G' and loss modulus G" as measured by DMTA. The storage modulus (G') and loss modulus (G") values determined by DMTA allow to foresee the suitability of the adhesive binders for specific applications according to a viscoelastic window, such as those described by Chang (E. P. Chang, Viscoelastic Windows of Pressure-Sensitive Adhesives, in The Journal of Adhesion, Volume 34, 1991 - Issue 1-4, 189-200) that relate the G' and G" values to identify different types of PSAs.

The instant invention further relates to a method for the preparation of an adhesive binder as described herein by miniemulsion polymerization. Miniemulsion polymerization for obtaining an adhesive binder as described herein, may be performed in a similar manner as the preparation of the NIPU by miniemulsion polymerization as described above.

In particular, the preparation of the adhesive binder comprises the following steps:
a) preparing an organic phase comprising mixing the NIPU as described herein with an acrylic monomer and a costabilizer, at a NIPU weight proportion from 1 to 20 wt.%, in particular from 2 to 15 wt.% and more in particular from 5 to 10 wt.%; and a costabilizer weight proportion from 2 to 4 wt.% with respect to the total weight amount of acrylic monomer and NIPU;
b) preparing an aqueous phase comprising dissolving a surfactant in water in a weight amount of surfactant from 0.5 to 10 wt.% based on the total weight of water, in particular from 1 to 8 wt.%, and more in particular from 2 to 6 wt.%;
c) mixing the organic phase and the aqueous phase by sonication, high-shear mixing or homogenizing, in particular by sonication, thereby obtaining a miniemulsion;
d) heating the miniemulsion of step c) to a temperature from 50 to 85°C, in particular from 55 to 80 °C, and more in particular, from 60 to 75 °C, thereby providing a heated miniemulsion;
e) adding a thermal initiator to the heated miniemulsion of step d) to obtain a reaction mixture;
f) maintaining the reaction mixture at a temperature from 50 to 85°C, in particular from 55 to 80 °C, and more in particular, from 60 to 75 °C for from 1 to 8 hours, in particular from 2 to 6 hours, thereby obtaining the adhesive binder.

In step a) preparing the organic phase by mixing the NIPU as described herein with an acrylic monomer and a costabilizer, and in step b) preparing the aqueous phase by dissolving a surfactant in water using methods known in the art.

In the method of preparing the adhesive binder described herein the acrylic monomer are as described above for the adhesive binder, and may be selected from the group consisting of methyl methacrylate, butyl acrylate and acrylic acid, 2-ethylhexylacrylate, methacrylic acid, butylmethacrylate. For instance, the acrylic monomer may also be a mixture of acrylic monomers as described above. The NIPU is also as described above.

The NIPU weight proportion used is from 1 to 20 wt.%, in particular from 2 to 15 wt.% and more in particular from 5 to 10 wt%; with respect to the total weight amount of acrylic monomer and NIPU. NIPU amounts within these ranges have been found to provide adhesive binders with good adhesive properties.

The costabilizer may be mixed with the NIPU and the acrylic monomer at the same time or may be pre-mixed with the NIPU and/or with the acrylic monomer. The costabilizer (also known as a cosurfactant) typically is a highly monomer-soluble, highly water-insoluble material and may be used to increase diffusional stability of the miniemulsion. Suitable costabilizers may be selected from, e.g., stearyl acrylate and hexadecane.

The costabilizer weight proportion in the organic phase is from 2 to 4 wt.% with respect to the total weight of acrylic monomer and NIPU.

The mixture of the NIPU, the acrylic monomer and the costabilizer as such may already constitute the organic phase, accordingly the organic phase obtained may typically consist of the mixture of the NIPU, the acrylic monomer and the costabilizer. Therefore, similar to what is described above, the preparation of the organic phase advantageously does not need an organic solvent.

The organic and the aqueous phases may be prepared simultaneously, e.g., in parallel, or one after the other, in sequence.

In a method for the preparation of an adhesive binder as described herein a surfactant is added to stabilize the miniemulsion used for the polymerization to obtain the adhesive binder. In a method for preparation of an adhesive binder as described herein the surfactant may be selected from the group consisting of sodium dodecyl sulfate, fatty alcohol sulfate, sodium salt and alkyldiphenyloxide disulfonate.

To prepare the aqueous phase, the surfactant may be used in a weight amount from 1 to 6 wt.% based on the total weight of water, in particular from 2 to 5 wt.% and more in particular from 3 to 4 wt.%, yet more in particular of about 4 wt.%.

A method as described herein comprises a step c) of mixing the organic phase and the aqueous phase by sonication, thereby obtaining a miniemulsion.

A miniemulsion for the preparation of the adhesive binder is equivalent to the miniemulsion as described above for the NIPU preparation.

At the beginning of a method of preparation of an adhesive binder as described herein the miniemulsion is an aqueous dispersion of oil droplets and the oil droplets of the miniemulsion are constituted by the NIPU and acrylic monomer. The miniemulsion obtained in the method of the preparation of the adhesive monomer may have a Z-average size as defined above. As the polymerization progresses the miniemulsion oil droplets will contain the product of polymerization of the NIPU and acrylic monomer.

In step c), sonication, high-shear mixing or homogenizing may be performed as described above for the NIPU preparation, and step c) may comprise prior to sonication, a step wherein the aqueous phase and the organic phase are mixed to provide a coarse emulsion, e.g., by stirring.

In step d) of the preparation of the adhesive binder the miniemulsion of step c) is heated to a temperature from 50 to 85 °C, in particular from 55 to 80 °C, and more in particular, from 60 to 75 °C thereby providing a heated miniemulsion.

In a method for the preparation of an adhesive as described herein a thermal initiator is added in step e) for accelerating the reaction between the NIPU and the acrylic monomer. In a method for the preparation of an adhesive as described herein the thermal initiator may be selected from ammonium persulfate, potassium persulfate, hydrogen peroxide, lauroyl peroxide and azobisisobutironitrile. The thermal initiator may be typically added in an amount from 0.25 to 1.25 wt.%, in particular from 0.5 to 0.75 wt.%, based on the total weight amount of acrylic monomer and NIPU.

In step f) the reaction mixture of step e) is maintained at a temperature from 50 to 85°C, in particular from 55 to 80 °C, and more in particular, from 60 to 75 °C, for from 1 to 8 hours, in particular from 2 to 6 hours, thereby obtaining the adhesive binder. At this range of temperatures, the polymerization reaction takes place in the presence of the thermal initiator. As a mode of example, the reaction temperature may be of about 70 °C. As a skilled person will understand, the exact reaction time may depend on the exact reaction conditions and exact reactants and catalysts used. As a mode of example, for a reaction temperature of 70 °C the temperature may be maintained for about 4 hours.

In a method for the preparation of an adhesive binder as described herein, the polymerization reaction may be terminated by methods known in the art. For instance, the polymerization reaction may be terminated by adding hydroquinone.

Typically, in a method of preparation of an adhesive binder as described herein the yield of the reaction between the NIPU and the acrylic monomer can be measured by techniques known by the skilled person. For instance, the conversion of the polymerization reaction may be monitored by gravimetry. For example, the yield of reaction can be determined by quantifying the residual amounts of starting materials and side products. In particular, the % of conversion may be measured by gravimetry or by Gas Chromatography. Typically, the % of conversion may be of at least 90 %, in particular of at least 92%, more in particular of at least 94%. In several embodiments the yield of conversion may be from 94.0 to 99.0%, in particular from 95.5 to 98.6%.

The particle size of the emulsion during polymerization may also monitored by, e.g., measuring Z-average size by dynamic light scattering (DLS).

It has been found that in a method of preparing an adhesive binder as described herein the particle size remains fairly stable. In particular, the particle size at the beginning of the method and at the end of the polymerization may be typically increased or decreased by at most 30 %, in particular from 1 to 28 %, more in particular from 5 to 25%, based on the difference in Z-average size measured at the beginning and at end of the polymerization reaction, divided by the Z-average size at the beginning of the polymerization reaction. A fairly stable particle size, as found in a method as described herein means that no acrylic monomer diffusion has taken place during the polymerization process and thus the main loci of the particle formation are droplets. Therefore, the lower variability of the Z-average size of the miniemulsion, the better control of the microstructure of the adhesive binder synthesized.

In a particular embodiment, the method of preparing the adhesive binder described herein comprises the following steps:
a) preparing an organic phase comprising mixing the NIPU as described herein with a mixture of acrylic monomers consisting of butylacrylate, methylmethacrylate and of acrylic acid, and a costabilizer, at a NIPU weight proportion from 5 to 10 wt.%; and stearyl acrylate as a costabilizer in a weight proportion from 2 to 4 wt.%; with respect to the total weight amount of acrylic monomers and NIPU;
b) preparing an aqueous phase comprising dissolving a surfactant in water in a weight amount of surfactant from 2 to 6 wt.% based on the total weight of water;
c) mixing the organic phase and the aqueous phase by sonication, e.g., at 200W at a temperature of 25 °C during 30 min, thereby obtaining a miniemulsion;
d) heating the miniemulsion of step c) to a temperature from 60 to 75 °C, in particular about 70 °C thereby providing a heated miniemulsion;
e) adding ammonium persulfate as a thermal initiator to the heated miniemulsion of step d) to obtain a reaction mixture;
f) maintaining the reaction mixture of step e) at a temperature from 60 to 75 °C, in particular about 70 °C, for from 2 to 6 hours, in particular about 4 hours, followed by the addition of hydroquinone to terminate the polymerization reaction, thereby obtaining the adhesive binder.

The adhesive binder obtained or obtainable by the method as described herein typically has the properties as described above for the adhesive binder, in particular, in the form of a dispersion as also described above. Accordingly, the instant invention also relates to an adhesive binder obtained or obtainable by said method.

The adhesive binder in the form of a dispersion may be useful as such. Advantageously, the adhesive binder does not require such additional steps and may preferably be used as such in the form of a dispersion or directly formulated to obtain an adhesive formulation.

When use as such an adhesive binder as described herein may be used as a pressure sensitive adhesive (PSA).

An adhesive binder as described herein may also be used to obtain an adhesive formulation. The exact composition of an adhesive formulation comprising an adhesive binder as described herein may vary greatly depending on the final application of the adhesive formulation.

For instance, adhesive formulations comprising an adhesive binder as described herein may be useful in, e.g., in the manufacture of goods (e.g., shoe production, lamination, e.g., wood lamination, and bookbinding), in packaging (e.g., labelling, boxing, lamination, and taping) or in construction (e.g., protective tapes, and painting tapes).

The instant invention further relates to an article comprising an adhesive binder as described herein, e.g., applied as such or as part of an adhesive formulation. In particular an article may be selected from shoes, laminates, books, packaged products (e.g., labelled or boxed products) and products for construction (e.g., protective tapes, and painting tapes).

### EXAMPLES

### Example 1: NIPU preparation

NIPU was obtained by polycondensation of isosorbide bis(methylcarbonate) (IBMC) and a hydrophobic fatty acid-based dimer diamine, also simply referred to as dimer diamine or DDA.

IBMC was obtained using the method described in WO2014114823A1. In particular: in a glass reactor equipped with a magnetic stirrer, a thermometer and a reflux condenser, were mixed 10 g of isosorbide (0.0674 mol), and 182 g of dimethyl carbonate (DMC) (2.022 mol) and less than 0.05 wt.% of catalyst (potassium carbonate) with respect to the total amount of isosorbide and DMC. The reaction mixture was heated at reflux temperature with stirring for 0.5 hour in a glycerol bath maintained at 100 °C. During this time the temperature of the reaction mixture is continuously decreased indicating that methanol is being formed. The reflux condenser is then replaced by a Vigreux rectification column with 18 theoretical plates connected to a condenser and the reaction evolved by continuous distillation of methanol or the methanol / DMC mixture until the temperature of the reaction mixture reaches a value corresponding to the boiling point of the DMC (90 °C). The heat flow to the reaction mixture is adjusted so that the temperature of the vapors at the top of the column is always maintained below 75 °C to avoid excessive loss of DMC. The reaction is terminated when no hydroxyl band is observed by FTIR. The reaction mixture is then cooled to room temperature and the catalyst is removed by filtration, the cake is washed with DMC and the combined filtrates are evaporated in vacuo to give a residue which was identified by1 H-NMR, 13 °C-NMR, And elemental analysis such as isosorbide di (methyl carbonate). The percentage of oligomers was determined by GPC and was dependent on the concentration of catalyst. The catalyst is recovered in a yield of at least 99%.

A commercially available dimer diamine (DDA) was used, in particular the DDA used was a C36 fatty acid-based dimer diamine (Priamine 1075^{™} from CRODA).

The polycondensation reactions were performed in aqueous media by miniemulsion polymerization process as follows:

### A). Miniemulsification:

An organic phase was prepared by mixing IBMC and the DDA Priamine^{™} 1075, at three different molar ratios of IBMC to DDA, i.e., 1:1, 2:1 and 1:2. For instance, a molar ratio of 1:1 was obtained mixing 10 g of IBMC and 38.96 g of DDA.

An aqueous phase was prepared by dissolving 24.48g of Polyoxyethylene (20) sorbitanmonooleate (commercialized as Tween 80) as a surfactant in 244.8 ml of water.

Both phases were mixed in a 500mL flask for 10 minutes using a magnetic stirrer at 1000rpm.

A coarse emulsion was obtained which was sonicated in a Branson Sonifier 450 during 20min at 170W of sonication to provide a miniemulsion having a Z-average size of 0.3 µm.

The Z-average size was measured by Dynamic light Scattering as it is defined in ISO 13321, using a Zetasizer nano ZS from Malvern Panalytical by diluting a fraction of the NIPU dispersion with deionized water. The reported average particle size values represent a Z-average size of three different measurements.

### B). Batch polymerization:

A series of polymerizations were carried out in a 500mL glass reactor equipped with reflux condenser, stirrer, sampling device and nitrogen inlet.

318 g of the miniemulsion of IBMC and DDA were added to the reactor and kept under stirring and nitrogen atmosphere (12-15 mL/min).

Different catalysts were selected to perform the polymerizations in dispersed media: aluminium triflate (ALT), Titanium (IV) butoxide (Ti(OBu)4), Diethylentriamine (DETA) and Triethylenediamine (DABCO).

For each polymerization, the catalyst of choice was added to the reactor in an amount of 3 mol% with respect to the total mols of diamine and isosorbide after the miniemulsification step.

The reaction temperature (80°C) was set constant by controlling the temperature of the fluid in the jacket by means of a thermostatic bath and a heat exchanger.

The temperature was maintained at 80°C for 5 hours and stopped by cooling down reactor temperature.

### C) Drying process:

NIPU product was dried using a rotary evaporator.

The NIPU was obtained in semi-solid form, having a consistency similar to that of honey.

### Example 2: NIPU characterization

The product of the polymerization was characterized by determining the average weight molecular weight (Mw) and the average number molecular weight (Mn) by Gel Permeation Chromatography (GPC).

A sample of the reaction mixture was characterized prior to drying by GPC. The following table lists the conditions used for the characterization:

| | |
|---|---|
| Instrument: | GPC Model AZURA by Knauer |
| Detector: | IR |
| Detector temperature: | 40°C |
| Column : | Resipore 3 µm (300 × 7,5 mm) |
| Mobile phase : | THF |
| Column temperature: | 40 °C |
| Flow : | 1 ml/min |
| Injection Volume: | 100 µl |
| Pattern: | Polystyrene (PS) |

The yield of reaction was determined by quantification of the residual amounts of starting materials (IBMC and DDA) and side products (isosorbide and isosorbide monomethyl carbonate (IMMC)).

The GPC spectra revealed that linear and short chain NIPUs were obtained.

The characterization of the different NIPUs obtained is shown in Table 1.

**Table 1: characterization of the NIPU products and yields of reaction**

| REFERENCE | Catalyst | IBMC to DDA (molar ratio) | Mw (g/mol) | Mn (g/mol) | PDI (Mw/Mn) | Yield (%) |
|---|---|---|---|---|---|---|
| NIPU-cat1 | ALT | 1:1 | 2305 | 2213 | 1.0417 | 86,14 |
| NIPU-cat1 | ALT | 2:1 | 2422 | 2268 | 1.0678 | 82,73 |
| NIPU-cat1 | ALT | 1:2 | 2174 | 2105 | 1.0328 | 82,56 |
| NIPU-cat2 | DETA | 1:1 | 2471 | 2370 | 1.0424 | 89,19 |
| NIPU-cat2 | DETA | 2:1 | 2298 | 2163 | 1.0626 | 80,59 |
| NIPU-cat3 | Ti(BuO)₄ | 1:1 | 2259 | 2117 | 1.0673 | 80,99 |
| NIPU-cat4 | DABCO | 1:1 | 2492 | 2341 | 1.0649 | 81,43 |

The formation of urethane groups in the NIPU product was observed by fourier transform infrared (FTIR).

FTIR spectra of materials deposited on KBr plate were recorded using Vertex 70 spectrometer from Bruker over spectral range of 4000-400 cm⁻¹, with MIR source and RT-DLaTGS detector using a resolution of 4 cm⁻¹ and an aperture of 6 mm.

It was observed that the carbonate group related to IBMC starting material with a characteristic peak at 1754 cm⁻¹ disappeared in the NIPU product samples and a different peak appeared around 1670 cm⁻¹ related to the characteristic urethane group of the NIPU.

### Example 3: Hybrid Acrylic-NIPU binder adhesive preparation

Miniemulsion polymerization was used to prepare two Acrylic-NIPU hybrid formulations with the NIPUs prepared according to Example 1 and acrylic monomers, with a 5 wt.% of NIPU and a 10 wt.% of NIPU respectively with respect to the total weight amount of acrylic monomer and NIPU (respectively referred to as the total amount of A-NIPU.5 and A-NIPU.10).

Miniemulsion polymerization was also used to prepare a comparative acrylic system from acrylic monomers in absence of NIPU (referred to as A.0 or simply as A).

The process was performed, as follows:

### A) Miniemulsification process:

An organic phase was prepared by mixing of a mixture of acrylic monomers and NIPU according to the amounts and percentages detailed in table 2 and 6.6 g of stearyl acrylate as costabilizer.

**Table 2: Composition of Hybrid Acrylic-NIPU binder formulations and comparative acrylic formulation**

| **REFERENCE** | **Amount (g)** | | **Percentage (wt.%)** | |
|---|---|---|---|---|
| | **NIPU** | **Acrylic monomers** | **NIPU** | **Acrylic monomers** |
| A-0 | - | 165 | - | 100% |
| A-NIPU.5 | 8.25 | 156.75 | 5% | 95% |
| A-NIPU.10 | 15 | 150 | 10% | 90% |

The NIPU used corresponded to the NIPU-cat3 prepared according to Example 1 with the properties detailed in Table 1.

The acrylic monomer mixture used was 88% of butylacrylate, 10 wt.% of methylmethacrylate and 2 wt.% of acrylic acid, based on the total percentage of acrylic monomers.

An aqueous phase by dissolving 9.6g of Alkyldiphenyloxide Disulfonate (Dowfax 2A1) as a surfactant in 240g of water.

Both phases were mixed in a 500ml flask for 10 minutes using a magnetic stirrer at 1000rpm.

A coarse emulsion was obtained which was sonicated in a Branson Sonifier 450 30min at 200W.

### B) Batch polymerization:

The polymerizations were carried out in a 500mL glass reactor equipped with reflux condenser, stirrer, sampling device and nitrogen inlet. Reaction temperature (70°C) was set constant by controlling the temperature of the fluid in the jacket by means of a thermostatic bath and a heat exchanger. 400g of each of the prepared miniemulsions (A-0, A-NIPU-5 and A-NIPU-10) were added to the reactor and kept under stirring and nitrogen atmosphere (12-15 mL/min). 1.25 g of the thermal initiator (ammonium persulfate) was added once the miniemulsion reached the polymerization temperature (70°C).

The conversion of the polymerization was monitored by gravimetry.

The temperature was maintained at 70°C for 4 hours and the reaction was terminated by adding hydroquinone.

The kinetics of the different polymerizations for A.0, A-NIPU.5 and A-NIPU.10 is summarized in table 3.

**Table 3: progression of the polymerization reactions**

| **Time (min)** | **% of conversion** | | |
|---|---|---|---|
| | **A.0** | **A-NIPU.5** | **A-NIPU.10** |
| 20 | 2.1 | 21.6 | 33.3 |
| 60 | 69.1 | 66.4 | 94.2 |
| 90 | 94.0 | n.d. | 94.3 |
| 120 | 95.7 | 98.6 | 95.5 |
| 240 | 97.1 | 97.4 | 96.1 |

The particle size of the emulsion during polymerization was also monitored by measuring the Z- average size by dynamic light scattering (DLS).

As can be seen in Table 4 the particle size was stable during the polymerization process. A stable particle size advantageously indicated that there was no diffusion of the acrylic monomers during the synthesis and therefore, a good control of the microstructure of the Hybrid Acrylic-NIPU binder adhesive was achieved.

**Table 4: particle size of the hybrid acrylic-NIPU miniemulsions during the polymerization reactions**

| **Time (min)** | **Particle size (nm)** | |
|---|---|---|
| | **A-NIPU.5** | **A-NIPU.10** |
| 0 | 155.5 | 95.03 |
| 30 | 120.3 | 98.28 |
| 60 | 114.7 | 100.16 |
| 120 | 115.5 | 101.56 |
| 180 | 115 | 101.8 |

The particle size measured corresponds to the Z-average size and was measured by Dynamic light scattering (DLS) according to ISO13321 as indicated above.

### Example 4: Acrylic-NIPU hybrid binder adhesive characterization

### Thermal properties

The hybrid acrylic-NIPU binder formulations (A-NIPU-5 and A-NIPU-10) were characterized by Differential Scanning Calorimetry (DSC) in order to check the influence that the presence of NIPU has on the thermal properties of the binder compared to an acrylic polymer binder obtained in the same conditions (A-0).

DSC was performed by in a DSC Q-100 (TA Instruments). Aluminium pans containing 10-15mg sample were heated from -90 to 350°C under nitrogen atmosphere (50mL/min). The glass transition temperature is taken at the half height of the change in heat capacity

The glass transition temperature (Tg) of the different formulations was determined from binder formulation samples. Samples were dried overnight before being test.

The measurements of the Tg of the different formulations prepared are shown in Table 5.

**Table 5: DSC characterization of the formulations**

| **REFERENCE** | **Tg** |
|---|---|
| A.0 | -36 °C |
| A-NIPU.5 | -37.8 °C |
| A-NIPU.10 | -36.7 °C |

Table 5 shows that the incorporation of 5% and 10% of NIPU has no significant influence on Tg if compared with the conventional system.

### Mechanical properties

The adhesive binders prepared above were cast at ambient temperature to determine their mechanical properties. A sample of 50 g of binder formulation was cast on a metal mold with a 2cm thickness and after the evaporation 1.3 mm films were obtained.

The mechanical properties were analysed using dynamic mechanical thermal analysis (DMTA). DMTA was carried out on a Triton Tritec 2000 apparatus. The test corresponds to a temperature sweep, at a heating rate of 2 °C/min and at a constant frequency of 1 Hz in bending mode.

This type of dynamic-mechanical analysis characterizes the mechanical properties of a viscoelastic material as a function of time, temperature and frequency while the material is subjected to a periodic oscillatory force (in this case bending). By these measurements, the force is decomposed into the storage module (real part) and the loss module (imaginary part). The first module is related to the elastic component of the material while the second is related to the viscous component. From the evolution of the storage module, the loss module and the loss factor (relationship between the two modules) with the temperature, the glass transition temperature of the material (Tg) can be calculated.

The Tangent of Delta (also referred to as tan delta or tan δ) quantifies the way in which a material absorbs and disperses energy. The tanδ can be calculated from the DMTA. The storage modulus G' and the loss modulus G" were also calculated from the DMTA.

The measured tanδ, G' and G" for the different cast samples is shown in Table 6.

**Table 6: tan δ, G' and G" of the formulations measured by DMTA**

| **REFERENCE** | **tan δ at its maximum** | **Storage modulus G' (Pa) at 25 °C** | **Loss modulus G" (Pa) at 25 °C** |
|---|---|---|---|
| A.0 | 1.82 (at -23.6 °C) | 2.59e+05 | 6.52e+05 |
| A-NIPU.10 | 2.04 (at -23.2°C) | 3.06e+05 | 7.70e+05 |

As it can be seen in Table 6, both samples present one transition at (at -23.6 °C in case of the acrylic copolymer and -23.2 °C in case of acrylic-NIPU sample) with very close tan δ values. Further, the storage and loss modulus of the hybrid system (A-NIPU-10) was only slightly higher than in case of acrylic copolymer at room temperature (at 25 °C). Therefore, no significant differences in terms of mechanical properties were found between the two samples.

### Rheological properties

Shear tests were carried out on film samples of the binder formulations obtained in the same way as those one used for studying the mechanical properties.

Shear tests were carried out in oscillatory mode using an ARES rheometer from TA instruments. A temperature sweep was performed at frequency of 1Hz and a heating speed of 2°C/min using parallel plates of 12 mm. Prior to the sweep, the linear viscoelasticity zone was checked.

According to Chang (E. P. Chang, Viscoelastic Windows of Pressure-Sensitive Adhesives, in The Journal of Adhesion, Volume 34, 1991 - Issue 1-4, 189-200) the performance of a commercial pressure sensitive adhesives (PSAs) can be related to the Tg and plateau modulus as well as the frequency dependence of dynamic testing. Good PSA systems typically have a depression of modulus at low frequencies (high temperatures), making bonding favourable and an elevation in the modulus at high frequencies (low temperature) making debonding stronger.

From the rheological curves obtained, the viscoelastic behaviour of the films made of the different binder formulations can be illustrated by the most characteristic values of the tan δ, G' and G" are summarized in Table 7.

**Table 7: tan δ, G' and G" of the formulations measured by rheology**

| **REFERENCE** | **tan δ** | **Storage modulus G' (Pa) at 25 °C** | **Loss modulus G" (Pa) at 25 °C** |
|---|---|---|---|
| A.0 | 2.682 (at 21.3°C) | 9.1e+04 | 2.23e+04 |
| A-NIPU.10 | 2.106 (at 21.3°C) | 1.07e+05 | 2.28e+04 |

From the results of Table 7 it can be seen that films from both A.0 and A-NIPU.10 showed the same behaviour. Based on the rheometric results, rather similar adhesive characteristics could be expected from these both binder formulations as adhesives.

### Adhesive properties

The adhesives properties of the different binder formulations (A-0 and A-NIPU-10) were characterized by Tack adhesion test. The properties of the NIPU pre polymer (NIPU-cat1) of example 1 were also evaluated as a comparative example.

The tests were carried out on an ARES rheometer from TA Instruments using parallel plates of 8 mm in diameter.

To perform the tests a film of 1.3mm of thickness of the binder formulation tested or the NIPU prepolymer was placed on the parallel plates of 8 mm in diameter.

The *probe tack* method consists on the contact of a cylindrical gauge with a flat or spherical tip with the adhesive film (velocity of contact (V) at this first stage can be of 30µm/s), maintaining the contact for a while and under a compression pressure (e.g., time of contact (tc) at this second stage can be, e.g., 1-1000s) and separating the cylindrical gauge from the film at a constant speed (the debonding speed (V_{deb}) at this third stage can be, e.g., from 1 to 10⁴ µm/s).

For the present example the compression stage 1) was carried out at 0.1 mm/s, the contact stage 2) lasted 120 s and was performed at a pressure of 1 MPa, and the de-bonding stage 3) was performed at 0.1 mm/s.

The result of the test is the representation of force (F (N)) versus displacement of the adhesive under stress (Strain (ε)) during the de-bonding stage.

Analyzing the curves obtained several phases were observed. The initial area corresponds to the union to the surface of the adherent then, a first phase of takeoff could be identified where the start of the takeoff process occurs, which represents the viscoelastic response of the material. It was observed that this first phase was very similar for both the A-0 and the A-NIPU-10 formulations. Then the process of formation of a spongy structure of elongated cavities in the normal direction to the plane of the adhesive (tension, high deformation) can be identified in a second phase. Then the final phase of takeoff can be identified, where the separation of both surfaces occurs, either by failure of the fibers (cohesive failure: Adhesive remains on both surfaces) or by takeoff of the base of the fibers from the surface of the gauge (adhesive failure: No adhesive remains on the surface of the gauge).

A plateau observed after the peak characterized said fibrillation phase. The stress corresponding to the beginning of fibrillation, depends on sample elasticity at large strains whereas the moment where this stress drops back to zero (debonding of the fibrils from the substrate) is a complex function of the level of dissipation and of the elasticity at very large strains.

Each debonding test was repeated three times for each adhesive and good reproducibility was obtained. The stress-strain curve for acrylic copolymer and acrylic-NIPU system showed intermediate fibrillation mode. In the case of Acrylic-NIPU sample (A-NIPU-10) it presented a hardening stage characterized by an increase in plateau stress. Therefore, the development of a hybrid acrylic-NIPU (10%) system (A-NIPU-10) when compared with a conventional acrylic system (A-0) presents a higher cohesive failure.

A higher cohesive failure advantageously results in a more difficult separation of the bonded substrates.

For the NIPU sample as such, no adhesion was observed and no curves following the above described-patterns could be recorded. This clearly showed that the NIPU prepolymer did not have adhesive properties.

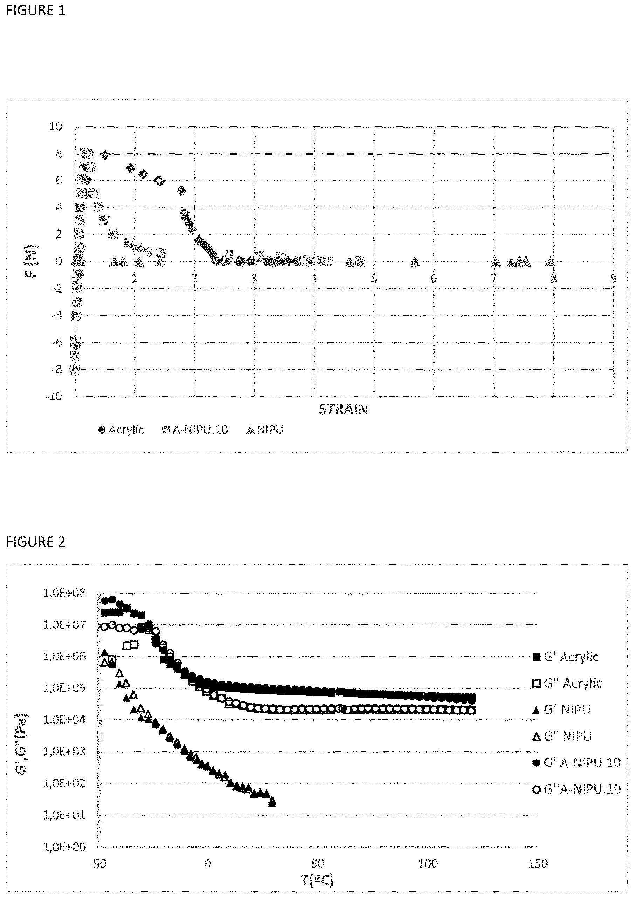

The force vs strain curves obtained for the A-NIPU.10, the conventional acrylic system (A-0) and the NIPU sample are shown figure 1, wherein it can be clearly observed the Higher cohesive failure of the A-NIPU.10 sample compared to the conventional acrylic system, and the lack of adhesion properties for the NIPU as such.

In figure 2 the G' and the G" vs temperature curves (as measured by DMTA) are shown of a hybrid acrylic NIPU system (A-NIPU.10), a conventional acrylic system (Acrylic) and a NIPU (NIPU) obtained according to the examples. As it can be observed, there is a difference of storage modulus (G') between an acrylic monomer and an adhesive binder according to the invention. This difference is indicative of a difference in the mechanical properties of the compositions because G' is a measure of material stiffness. Adhesive binders as described herein, such as the hybrid acrylic NIPU system (A-NIPU.10), typically present lower storage modulus (G') than the acrylic monomers as the latter have higher rigidity than the adhesive binders.

In case of the loss modulus, (G") no significant differences are observed between the acrylic monomers and the adhesive binder described herein.

## Claims

1. A non-isocyanate polyurethane (NIPU) comprising the repeating unit of formula (I) 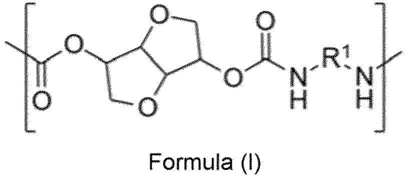
wherein R¹ represents a C10 to C54 hydrocarbondiyl group, in particular a C16 to C48 hydrocarbondiyl group, more in particular a C30 to C42 hydrocarbondiyl group, yet more in particular a C36 hydrocarbondiyl group, or a -R³-(O- R⁴)ₚ- ether or polyether group wherein R³ and R⁴ are independently selected from a linear or branched alkyl, in particular selected from a linear or branched C1 to C6, more in particular selected from methylene, ethylene, propylene or isopropylene, preferably R³ and R⁴ are the same, and more preferably both R³ and R⁴ are selected from methylene, and wherein p is from 1 to 68,
and having a weight average molecular weight (Mw) from 500 to 10000 g/mol and a number average molecular weight (Mn) from 500 to 10000 g/mol, both Mw and Mn as measured according to the description.

2. The NIPU of claim 1 wherein the NIPU is the reaction product of a diamine of formula (II) and an isosorbide bis(alkylcarbonate) of formula (III) 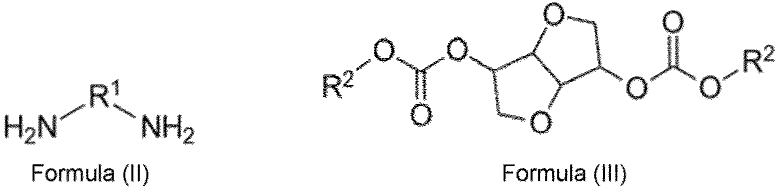
wherein R¹ is as defined in claim 1, and
wherein each R² independently represents a linear or branched alkyl, in particular a linear or branched C1 to C6 alkyl, more in particular represents methyl or ethyl, and yet more in particular represents methyl.

3. The NIPU of any one of claims 1-2 wherein the hydrocarbondiyl group of R¹ is a fatty-acid based dimer hydrocarbondiyl group.

4. The NIPU of any one of claims 2-3 wherein the diamine of formula (II) is a C30 to C42 fatty acid-based dimer diamine, yet more in particular is a C36 fatty acid-based dimer diamine, and yet more in particular a C36 fatty acid-based dimer diamine comprising a diamine of formula (IIa) and/or (IIb)

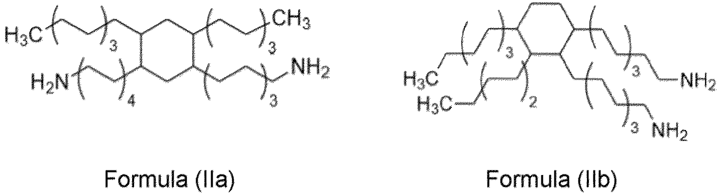

5. The NIPU of any one of claims 1-4 having a weight average molecular weight (Mw) from 750 to 7500 g/mol, in particular from 1000 to 5000, and more in particular from 1500 to 3000 g/mol.

6. The NIPU of any one of claims 1-5 having a number average molecular weight (Mn) from 750 to 7500 g/mol, in particular from 1000 to 5000, and more in particular from 1500 to 3000 g/mol.

7. A method for the preparation of a NIPU polymeric product comprising the NIPU of any one of claims 1-6 by miniemulsion polymerization comprising:
a) preparing an organic phase comprising mixing the diamine of formula (II) as defined in any one of claims 2-4 and the isosorbide bis(alkylcarbonate) of formula (III) as defined in claim 2, at a molar ratio of diamine to isosorbide bis(alkylcarbonate) from 1:2 to 2:1;
b) preparing an aqueous phase comprising dissolving a surfactant in water in a weight amount of surfactant from 5 to 15 wt.% based on the total weight of water;
c) mixing the organic phase and the aqueous phase by sonication, high-shear mixing or homogenization, in particular by sonication, thereby obtaining a miniemulsion;
d) heating the miniemulsion of step c) to a temperature from 60 to 85 °C, in particular from 65 to 85 °C, and more in particular, from 70 to 80 °C thereby providing a heated miniemulsion;
e) adding a catalyst to the heated miniemulsion of step d) in an amount from 1.5 to 6 mol%, in particular from 2 to 4 mol%, with respect to total sum of moles of diamine of formula (II) and isosorbide of formula (III), thereby providing a reaction mixture
f) maintaining the reaction mixture of step e) at a temperature from 60 to 85°C, in particular, from 65 to 85 °C, more in particular from 70 to 80 °C for from 1 to 8 hours, in particular from 2 to 7 hours thereby obtaining a reaction product;
g) drying the reaction product of step f) to provide the NIPU polymeric product.

8. The method according to claim 7, wherein the surfactant is selected from nonionic surfactants, in particular polyoxyethylene (20) sorbitan monooleate; and/or the catalysts is selected from the group consisting of aluminium triflate (ALT), titanium (IV) butoxide (Ti(OBu)₄), diethylentriamine (DETA) and triethylenediamine (DABCO).

9. An adhesive binder obtained by the polymerization of i) a NIPU as defined in any one of claims 1-6 and ii) an acrylic monomer, in particular an acrylic monomer selected from methyl methacrylate, butyl acrylate and acrylic acid, 2-ethylhexylacrylate, methacrylic acid, and butylmethacrylate and mixtures thereof.

10. The adhesive binder of claim 9, obtained by reacting a weight proportion of i) from 1 to 30 wt. %, in particular from 5 to 10 wt.% and a weight proportion of ii) from 99 to 70 wt.%, in particular from 95 to 90 wt. %, the weight proportion of each component being based on the total weight of NIPU (i) and acrylic monomer (ii).

11. The adhesive binder of claim 9 or 10 obtainable by reacting i) and ii) in the presence of water, a surfactant, in particular a surfactant selected from sodium dodecyl sulfate, fatty alcohol sulfate, sodium salt, and alkyldiphenyloxide disulfonate; a thermal initiator, in particular a thermal initiator selected from ammonium persulfate, potassium persulfate, hydrogen peroxide, lauroyl peroxide, azobisisobutironitrile, water (DDI), and/or a costabilizer, in particular a costabilizer selected from stearyl acrylate and hexadecane.

12. The adhesive binder of any one of claims 9-11, wherein the adhesive binder is an aqueous dispersion having a Z-average size, as measured according to the description, from 0.01 to 0.50 µm, in particular from 0.05 to 0.25 µm, more in particular from 0.07 to 0.20 µm and yet more in particular from 0.09 to 0.17 µm.

13. A method for the preparation of an adhesive binder of any one of claims 9-12 by miniemulsion polymerization comprising:
a) preparing an organic phase comprising mixing the NIPU of any one of claims 1 to 6 with an acrylic monomer and a costabilizer, at a NIPU weight proportion from 1 to 20 wt.%, in particular from 2 to 15 wt.% and more in particular from 5 to 10 wt.%; and a costabilizer weight proportion from 2 to 4 wt.% with respect to the total weight amount of acrylic monomer and NIPU,
b) preparing an aqueous phase comprising dissolving a surfactant in water in a weight amount of surfactant from 0.5 to 10 wt.% based on the total weight of water, in particular from 1 to 8 wt.%, and more in particular from 2 to 6 wt.%;
c) mixing the organic phase and the aqueous phase by sonication, high-shear mixing or homogenizing, in particular by sonication, thereby obtaining a miniemulsion;
d) heating the miniemulsion of step c) to a temperature from 50 to 85°C, in particular from 55 to 80 °C, and more in particular, from 60 to 75 °C, thereby providing a heated miniemulsion;
e) adding a thermal initiator to the heated miniemulsion of step d) to obtain a reaction mixture;
f) maintaining the reaction mixture of step e) at a temperature from 50 to 85°C, in particular from 55 to 80 °C, and more in particular, from 60 to 75 °C, for from 1 to 8 hours, in particular from 2 to 6 hours, thereby obtaining the adhesive binder.

14. The method according to claim 13, wherein the surfactant is selected from sodium dodecyl sulfate, fatty alcohol sulfate, sodium salt and alkyldiphenyloxide disulfonate, and/or wherein the thermal initiator is selected from ammonium persulfate, potassium persulfate, hydrogen peroxide, lauroyl peroxide and azobisisobutironitrile and/or the costabilizer is selected from stearyl acrylate and hexadecane.

## Patentansprüche

1. Ein Nicht-Isocyanat-Polyurethan (NIPU), umfassend die Wiederholungseinheit der Formel (I) 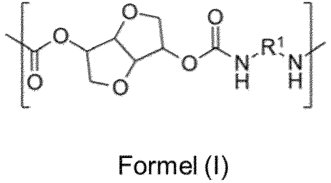
wobei R¹ eine C10- bis C54-Kohlenwasserstoffdiylgruppe, bevorzugt eine C16- bis C48-Kohlenwasserstoffdiylgruppe, bevorzugter eine C30- bis C42-Kohlenwasserstoffdiylgruppe, stärker bevorzugt eine C36-Kohlenwasserstoffdiylgruppe, oder eine -R³-(O- R⁴)ₚ-Ether- oder Polyethergruppe darstellt, wobei R³ und R⁴ unabhängig voneinander aus einem linearen oder verzweigten Alkyl ausgewählt sind, bevorzugt aus einem linearem oder verzweigtem C1- bis C6-Alkyl, stärker bevorzugt aus Methylen, Ethylen, Propylen oder Isopropylen, bevorzugt R³ und R⁴ gleich sind und stärker bevorzugt sowohl R³ als auch R⁴ aus Methylen ausgewählt sind, und wobei p von 1 bis 68 reicht,
und das ein gewichtsmittleres Molekulargewicht (Mw) von 500 bis 10.000 g/mol und ein zahlenmittleres Molekulargewicht (Mn) von 500 bis 10.000 g/mol aufweist, wobei sowohl Mw als auch Mn gemäß der Beschreibung gemessen werden.

2. Das NIPU nach Anspruch 1, wobei das NIPU das Reaktionsprodukt eines Diamins der Formel (II) und eines Isosorbid-bis(alkylcarbonats) der Formel (III) ist, 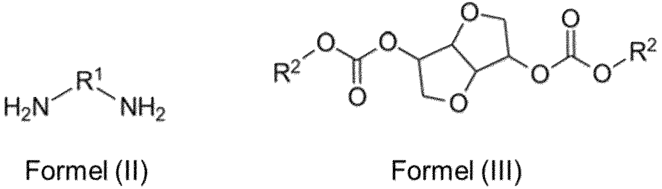
wobei R¹ wie in Anspruch 1 definiert ist, und
wobei jedes R² unabhängig voneinander ein lineares oder verzweigtes Alkyl darstellt, bevorzugt ein lineares oder verzweigtes C1- bis C6-Alkyl, bevorzugter Methyl oder Ethyl und stärker bevorzugt Methyl.

3. Das NIPU nach einem der Ansprüche 1-2, wobei die Kohlenwasserstoffdiylgruppe von R¹ eine dimere Kohlenwasserstoffdiylgruppe auf Fettsäurebasis ist.

4. Das NIPU nach einem der Ansprüche 2 bis 3, wobei das Diamin der Formel (II) ein dimeres Diamin auf C30- bis C42-Fettsäurebasis ist, bevorzugt ein dimeres Diamin auf C36-Fettsäurebasis und bevorzugter ein dimeres Diamin auf C36-Fettsäurebasis, das ein Diamin der Formel (Ila) und/oder (Ilb) umfasst.

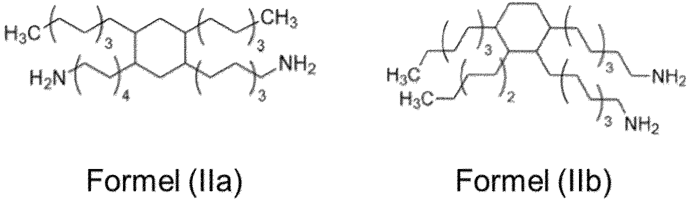

5. Das NIPU nach einem der Ansprüche 1-4 mit einem gewichtsmittleren Molekulargewicht (Mw) von 750 bis 7.500 g/mol, bevorzugt von 1.000 bis 5.000 und bevorzugter von 1.500 bis 3.000 g/mol.

6. Das NIPU nach einem der Ansprüche 1-5 mit einem zahlenmittleren Molekulargewicht (Mn) von 750 bis 7.500 g/mol, bevorzugt von 1.000 bis 5.000 und bevorzugter von 1.500 bis 3.000 g/mol.

7. Ein Verfahren zur Herstellung eines NIPU-Polymerprodukts, das das NIPU nach einem der Ansprüche 1-6 enthält, durch Miniemulsionspolymerisation, umfassend:
a) Herstellen einer organischen Phase, umfassend das Mischen des Diamins der Formel (II), wie in einem der Ansprüche 2-4 definiert, und des Isosorbid-bis(alkylcarbonats) der Formel (III), wie in Anspruch 2 definiert, in einem molaren Verhältnis von Diamin zu Isosorbid-bis(alkylcarbonat) von 1:2 bis 2:1;
b) Herstellen einer wässrigen Phase, umfassend das Lösen eines oberflächenaktiven Stoffs in Wasser in einer Gewichtsmenge des oberflächenaktiven Stoffs von 5 bis 15 Gew.-%, bezogen auf das Gesamtgewicht des Wassers;
c) Mischen der organischen Phase und der wässrigen Phase durch Ultraschallbehandlung, Mischen mit hoher Scherkraft oder Homogenisierung, insbesondere durch Ultraschallbehandlung, wodurch eine Miniemulsion erhalten wird;
d) Erhitzen der Miniemulsion aus Schritt c) auf eine Temperatur von 60 bis 85 °C, bevorzugt von 65 bis 85 °C und bevorzugter von 70 bis 80 °C, wodurch eine erhitzte Miniemulsion entsteht;
e) Zugabe eines Katalysators zu der erhitzten Miniemulsion von Schritt d) in einer Menge von 1,5 bis 6 Mol-%, insbesondere von 2 bis 4 Mol-%, bezogen auf die Gesamtsumme der Mole von Diamin der Formel (II) und Isosorbid der Formel (III), wodurch eine Reaktionsmischung bereitgestellt wird;
f) Halten der Reaktionsmischung von Schritt e) bei einer Temperatur von 60 bis 85 °C, bevorzugt von 65 bis 85 °C, bevorzugter von 70 bis 80 °C, für 1 bis 8 Stunden, insbesondere für 2 bis 7 Stunden, wodurch ein Reaktionsprodukt erhalten wird;
g) Trocknen des Reaktionsprodukts aus Schritt f), um das NIPU-Polymerprodukt zu erhalten.

8. Verfahren nach Anspruch 7, wobei der oberflächenaktive Stoff aus nichtionischen oberflächenaktiven Stoffen ausgewählt ist, insbesondere Polyoxyethylen(20)-sorbitanmonooleat; und/oder der Katalysator aus der Gruppe bestehend aus Aluminiumtriflat (ALT), Titan(IV)-butoxid (Ti(OBu)₄), Diethylentriamin (DETA) und Triethylendiamin (DABCO).

9. Ein Klebebindemittel, erhalten durch die Polymerisation von i) einem NIPU, wie in einem der Ansprüche 1-6 definiert, und ii) einem Acrylmonomer, insbesondere einem Acrylmonomer ausgewählt aus Methylmethacrylat, Butylacrylat und Acrylsäure, 2-Ethylhexylacrylat, Methacrylsäure und Butylmethacrylat sowie Mischungen davon.

10. Das Klebebindemittel nach Anspruch 9, erhalten durch Umsetzung eines Gewichtsanteils von i) von 1 bis 30 Gew.-%, insbesondere von 5 bis 10 Gew.-% und eines Gewichtsanteils von ii) von 99 bis 70 Gew.-%, insbesondere von 95 bis 90 Gew.-%, wobei der Gewichtsanteil jeder Komponente auf das Gesamtgewicht von NIPU (i) und Acrylmonomer (ii) bezogen ist.

11. Das Klebebindemittel nach Anspruch 9 oder 10, erhältlich durch Umsetzung von i) und ii) in Gegenwart von Wasser, eines oberflächenaktive Stoffs, insbesondere eines oberflächenaktiven Stoffs ausgewählt aus Natriumdodecylsulfat, Fettalkoholsulfat, Natriumsalz und Alkyldiphenyloxiddisulfonat; einem thermischen Initiator, insbesondere einen thermischen Initiator ausgewählt aus Ammoniumpersulfat, Kaliumpersulfat, Wasserstoffperoxid, Lauroylperoxid, Azobis(isobutyronitril), Wasser (DDI) und/oder einem Costabilisator, insbesondere einem Costabilisator ausgewählt aus Stearylacrylat und Hexadecan.

12. Das Klebebindemittel nach einem der Ansprüche 9-11, wobei das Klebebindemittel eine wässrige Dispersion mit einer Z-Durchschnittsgröße, gemessen gemäß der Beschreibung, von 0,01 bis 0,50 µm, bevorzugt von 0,05 bis 0,25 µm, bevorzugter von 0,07 bis 0,20 µm und stärker bevorzugt von 0,09 bis 0,17 µm, ist.

13. Ein Verfahren zur Herstellung eines Klebebindemittels nach einem der Ansprüche 9-12 durch Miniemulsionspolymerisation, umfassend:
a) Herstellen einer organischen Phase, umfassend das Mischen des NIPU nach einem der Ansprüche 1-6 mit einem Acrylmonomer und einem Costabilisator bei einem NIPU-Gewichtsanteil von 1 bis 20 Gew.-%, bevorzugt von 2 bis 15 Gew.-% und bevorzugter von 5 bis 10 Gew.-%, und einem Costabilisator-Gewichtsanteil von 2 bis 4 Gew.-%, bezogen auf die Gesamtgewichtsmenge von Acrylmonomer und NIPU,
b) Herstellen einer wässrigen Phase, umfassend das Lösen eines oberflächenaktiven Stoffs in Wasser in einer Gewichtsmenge des oberflächenaktiven Stoffs von 0,5 bis 10 Gew.-%, bezogen auf das Gesamtgewicht des Wassers, bevorzugt von 1 bis 8 Gew.-% und bevorzugter von 2 bis 6 Gew.-%;
c) Mischen der organischen Phase und der wässrigen Phase durch Ultraschallbehandlung, Mischen mit hoher Scherkraft oder Homogenisieren, insbesondere durch Ultraschallbehandlung, wodurch eine Miniemulsion erhalten wird;
d) Erhitzen der Miniemulsion aus Schritt c) auf eine Temperatur von 50 bis 85 °C, bevorzugt von 55 bis 80 °C und bevorzugter von 60 bis 75 °C, wodurch eine erhitzte Miniemulsion erhalten wird;
e) Zugabe eines thermischen Initiators zu der erhitzten Miniemulsion von Schritt d), um eine Reaktionsmischung zu erhalten;
f) Halten der Reaktionsmischung von Schritt e) bei einer Temperatur von 50 bis 85 °C, bevorzugt von 55 bis 80 °C und bevorzugter von 60 bis 75 °C, für 1 bis 8 Stunden, insbesondere 2 bis 6 Stunden, wodurch das Klebebindemittel erhalten wird.

14. Das Verfahren nach Anspruch 13, wobei der oberflächenaktive Stoff ausgewählt ist aus Natriumdodecylsulfat, Fettalkoholsulfat, Natriumsalz und Alkyldiphenyloxiddisulfonat und/oder wobei der thermische Initiator ausgewählt ist aus Ammoniumpersulfat, Kaliumpersulfat, Wasserstoffperoxid, Lauroylperoxid und Azobisisobutironitril und/oder der Costabilisator ausgewählt ist aus Stearylacrylat und Hexadecan.

## Revendications

1. Polyuréthane non isocyanate (NIPU) comprenant le motif répétitif de formule (I) 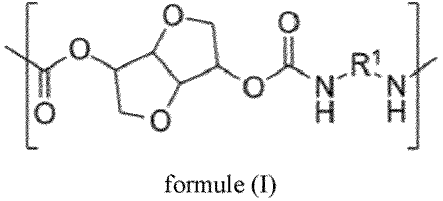
dans laquelle R¹ représente un groupe hydrocarbondiyle en C₁₀ à C₅₄, en particulier un groupe hydrocarbondiyle en C₁₆ à C₄₈, plus particulièrement un groupe hydrocarbondiyle en C₃₀ à C₄₂, encore plus particulièrement un groupe hydrocarbondiyle en C₃₆, ou un groupe éther ou polyéther -R³-(O-R⁴)ₚ- dans lequel R³ et R⁴ sont indépendamment choisis parmi les alkyles linéaires ou ramifiés, en particulier choisis parmi ceux en C₁ à C₆ linéaires ou ramifiés, plus particulièrement choisis parmi méthylène, éthylène, propylène et isopropylène, de préférence R³ et R⁴ sont identiques, et mieux encore R³ et R⁴ sont tous deux méthylène, et dans lequel p vaut de 1 à 68,
et ayant une masse moléculaire moyenne en masse (Mw) de 500 à 10 000 g/mol et une masse moléculaire moyenne en nombre (Mn) de 500 à 10 000 g/mol, les Mw et Mn étant toutes deux mesurées conformément à la description.

2. NIPU selon la revendication 1, lequel NIPU est le produit de la réaction d'une diamine de formule (II) et d'un bis(alkylcarbonate) d'isosorbide de formule (III) 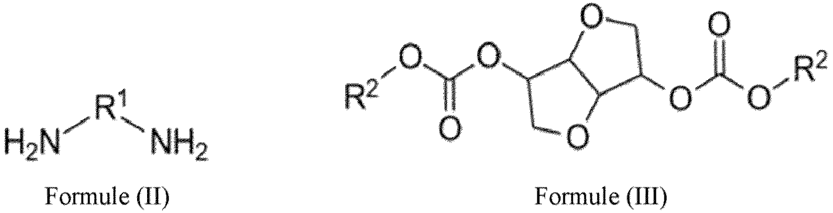
dans lesquelles R¹ est tel que défini dans la revendication 1, et
dans lesquelles chaque R² représente indépendamment un alkyle linéaire ou ramifié, en particulier un alkyle en C₁ à C₆ linéaire ou ramifié, plus particulièrement représente méthyle ou éthyle, et encore plus particulièrement représente méthyle.

3. NIPU selon l'une quelconque des revendications 1 et 2, dans lequel le groupe hydrocarbondiyle de R¹ est un groupe hydrocarbondiyle dimère à base d'acide gras.

4. NIPU selon l'une quelconque des revendications 2 et 3, dans lequel la diamine de formule (II) est une diamine dimère à base d'acide gras en C₃₀ à C₄₂, plus particulièrement est une diamine dimère à base d'acide gras en C₃₆, et encore plus particulièrement une diamine dimère à base d'acide gras en C₃₆ comprenant une diamine de formules (IIa) et/ou (IIb)

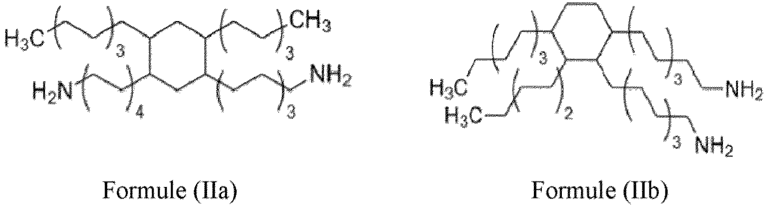

5. NIPU selon l'une quelconque des revendications 1 à 4, ayant une masse moléculaire moyenne en masse (Mw) de 750 à 7 500 g/mol, en particulier de 1 000 à 5 000 et plus particulièrement de 1 500 à 3 000 g/mol.

6. NIPU selon l'une quelconque des revendications 1 à 5, ayant une masse moléculaire moyenne en nombre (Mn) de 750 à 7 500 g/mol, en particulier de 1 000 à 5 000 et plus particulièrement de 1 500 à 3 000 g/mol.

7. Méthode pour la préparation d'un produit polymère de NIPU comprenant le NIPU selon l'une quelconque des revendications 1 à 6 par polymérisation en mini-émulsion, comprenant :
a) la préparation d'une phase organique, comprenant le mélange de la diamine de formule (II) telle que définie dans l'une quelconque des revendications 2 à 4 et du bis(alkylcarbonate) d'isosorbide de formule (III) tel que défini dans la revendication 2, en un rapport molaire de la diamine au bis(alkylcarbonate) d'isosorbide de 1/2 à 2/1 ;
b) la préparation d'une phase aqueuse, comprenant la dissolution d'un tensioactif dans de l'eau en une quantité en poids de tensioactif de 5 à 15 % en poids par rapport au poids total de l'eau ;
c) le mélange de la phase organique et de la phase aqueuse par sonification, mélange sous fort cisaillement ou homogénéisation, en particulier par sonification, ce qui donne ainsi une mini-émulsion ;
d) le chauffage de la mini-émulsion de l'étape c) à une température de 60 à 85 °C, en particulier de 65 à 85 °C, et plus particulièrement de 70 à 80 °C, ce qui donne ainsi une mini-émulsion chauffée ;
e) l'addition d'un catalyseur à la mini-émulsion chauffée de l'étape d) en une quantité de 1,5 à 6 % en moles, en particulier de 2 à 4 % en moles, par rapport à la somme totale des moles de diamine de formule (II) et d'isosorbide de formule (III), ce qui donne ainsi un mélange réactionnel ;
f) le maintien du mélange réactionnel de l'étape e) à une température de 60 à 85 °C, en particulier de 65 à 85 °C, et plus particulièrement de 70 à 80 °C, pendant 1 à 8 heures, en particulier 2 à 7 heures, ce qui donne ainsi un produit réactionnel ;
g) le séchage du produit réactionnel de l'étape f) pour que soit obtenu le produit polymère de NIPU.

8. Méthode selon la revendication 7, dans laquelle le tensioactif est choisi parmi les tensioactifs non-ioniques, en particulier le monooléate de sorbitan polyoxyéthyléné (20) ; et/ou le catalyseur est choisi dans le groupe constitué par le triflate d'aluminium (ALT), le butylate de titane(IV) (Ti(OBu)₄), la diéthylènetriamine (DETA) et la triéthylènediamine (DABCO).

9. Liant adhésif obtenu par la polymérisation de i) un NIPU tel que défini dans l'une quelconque des revendications 1 à 6 et ii) un monomère acrylique, en particulier un monomère acrylique choisi parmi le méthacrylate de méthyle, l'acrylate de butyle et l'acide acrylique, l'acrylate de 2-éthylhexyle, l'acide méthacrylique, et le méthacrylate de butyle, ainsi que leurs mélanges.

10. Liant adhésif selon la revendication 9, obtenu par réaction d'une proportion en poids de i) de 1 à 30 % en poids, en particulier de 5 à 10 % en poids, et d'une proportion en poids de ii) de 99 à 70 % en poids, en particulier de 95 à 90 % en poids, la proportion en poids de chaque composant étant basée sur le poids total du NIPU (i) et du monomère acrylique (ii).

11. Liant adhésif selon la revendication 9 ou 10, pouvant être obtenu par réaction de i) et ii) en présence d'eau, d'un tensioactif, en particulier d'un tensioactif choisi parmi le dodécylsulfate de sodium, un sulfate d'alcool gras, un sel de sodium, et un oxydisulfonate d'alkyldiphényle ; d'un amorceur thermique, en particulier d'un amorceur thermique choisi parmi le persulfate d'ammonium, le persulfate de potassium, le peroxyde d'hydrogène, le peroxyde de lauroyle, l'azobisisobutyronitrile, l'eau (DDI), et/ou d'un co-stabilisant, en particulier d'un co-stabilisant choisi parmi l'acrylate de stéaryle et l'hexadécane.

12. Liant adhésif selon l'une quelconque des revendications 9 à 11, dans lequel le liant adhésif est une dispersion aqueuse ayant une taille moyenne Z, telle que mesurée conformément à la description, de 0,01 à 0,50 µm, en particulier de 0,05 à 0,25 µm, plus particulièrement de 0,07 à 0,20 µm et encore plus particulièrement de 0,09 à 0,17 µm.

13. Méthode pour la préparation d'un liant adhésif de l'une quelconque des revendications 9 à 12 par polymérisation en mini-émulsion, comprenant :
a) la préparation d'une phase organique, comprenant le mélange du NIPU selon l'une quelconque des revendications 1 à 6 avec un monomère acrylique et un co-stabilisant, en une proportion en poids de NIPU de 1 à 20 % en poids, en particulier de 2 à 15 % en poids et plus particulièrement de 5 à 10 % en poids ; et une proportion en poids de co-stabilisant de 2 à 4 % en poids par rapport au poids total du monomère acrylique et du NIPU,
b) la préparation d'une phase aqueuse, comprenant la dissolution d'un tensioactif dans de l'eau en une quantité en poids de tensioactif de 0,5 à 10 % en poids par rapport au poids total de l'eau, en particulier de 1 à 8 % en poids, et plus particulièrement de 2 à 6 % en poids ;
c) le mélange de la phase organique et de la phase aqueuse par sonification, mélange sous fort cisaillement ou homogénéisation, en particulier par sonification, ce qui donne ainsi une mini-émulsion ;
d) le chauffage de la mini-émulsion de l'étape c) à une température de 50 à 85 °C, en particulier de 55 à 80 °C, et plus particulièrement de 60 à 75 °C, ce qui donne ainsi une mini-émulsion chauffée ;
e) l'addition d'un amorceur thermique à la mini-émulsion chauffée de l'étape d) pour que soit obtenu un mélange réactionnel ;
f) le maintien du mélange réactionnel de l'étape e) à une température de 50 à 85 °C, en particulier de 55 à 80 °C, et plus particulièrement de 60 à 75 °C, pendant 1 à 8 heures, en particulier 2 à 6 heures, ce qui donne ainsi le liant adhésif.

14. Méthode selon la revendication 13, dans laquelle le tensioactif est choisi parmi le dodécylsulfate de sodium, un sulfate d'alcool gras, un sel de sodium, et un oxydisulfonate d'alkyldiphényle, et/ou dans laquelle l'amorceur thermique est choisi parmi le persulfate d'ammonium, le persulfate de potassium, le peroxyde d'hydrogène, le peroxyde de lauroyle, et l'azobisisobutyronitrile, et/ou le co-stabilisant est choisi parmi l'acrylate de stéaryle et l'hexadécane.
